(19) **Europäisches Patentamt** / **European Patent Office** / **Office européen des brevets**

(11) **EP 3 729 792 B1**

(12) **FASCICULE DE BREVET EUROPEEN**

(45) Date de publication et mention
de la délivrance du brevet:
**26.01.2022   Bulletin 2022/04**

(21) Numéro de dépôt: **18815748.1**

(22) Date de dépôt: **17.12.2018**

(51) Classification Internationale des Brevets (IPC):
**H04L 29/12** *(2006.01)*        **H04B 7/0413** *(2017.01)*
**H04L 12/18** *(2006.01)*

(52) Classification Coopérative des Brevets (CPC):
**H04L 61/2069; H04L 12/189;** H04B 7/0452

(86) Numéro de dépôt international:
**PCT/EP2018/085149**

(87) Numéro de publication internationale:
**WO 2019/121482 (27.06.2019 Gazette 2019/26)**

(54) **PROCÉDÉ DE TRANSMISSION DE TRAME PAR UN POINT D'ACCÈS D'UN RÉSEAU LOCAL SANS-FIL**

**VERFAHREN ZUM ÜBERTRAGEN VON RAHMEN DURCH EINEN ZUGANGSPUNKT EINES DRAHTLOSEN LOKALEN NETZES**

**METHOD FOR TRANSMITTING FRAME BY A ACCESS POINT OF A WIRELESS LOCAL NETWORK**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017   FR 1762540**

(43) Date de publication de la demande:
**28.10.2020   Bulletin 2020/44**

(60) Demande divisionnaire:
**21213855.6**

(73) Titulaire: **SAGEMCOM BROADBAND SAS**
**92500 Rueil-Malmaison (FR)**

(72) Inventeurs:
- **SABATIER, Pierre**
  **92500 Rueil-Malmaison (FR)**
- **DEJARDIN, Romain**
  **92500 Rueil-Malmaison (FR)**
- **LALAM, Massinissa**
  **92500 Rueil-Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 3 229 395        WO-A1-2013/061009**
**WO-A1-2016/091874**

# Description

La présente invention concerne un procédé de transmission de trame par un point d'accès d'un réseau local sans-fil, la trame permettant l'envoi de données en mode point-à-point et en mode point-à-multipoint.

La mise en place de réseaux locaux sans-fil WLAN (« Wireless Local Area Network » en anglais) offre une grande flexibilité aux utilisateurs de dispositifs de communication nomades, tels que des ordinateurs, des tablettes, des téléphones intelligents, etc. De tels réseaux WLAN sont établis par des points d'accès AP (« Access Point » en anglais). De tels réseaux locaux sans-fil WLAN permettent ainsi de faciliter l'interconnexion de dispositifs au sein d'une habitation, d'un bureau,... en apportant une connectivité locale sans-fil afin d'éviter d'avoir recours à un câblage d'interconnexion. Un exemple se trouve dans EP 3229395.

On connaît par exemple les réseaux locaux sans-fil WLAN de type Wi-Fi, tel que défini dans la norme IEEE 802.11 et ses amendements, comme par exemple l'amendement IEEE 802.11 ax.

De manière à améliorer l'utilisation des ressources canal, le point d'accès d'un réseau compatible avec l'amendement IEEE 802.11ax (dans sa version « Draft 2.0 ») peut effectuer des transmissions de type MU-MIMO (« Multi-User - Multiple Inputs Multiple Outputs » en anglais). Cela permet, grâce à de la formation de faisceau (« beamforming » en anglais), de transmettre des données à plusieurs terminaux sans-fil sur une même ressource canal. Cependant, lorsque des mêmes données doivent être transmises à plusieurs terminaux sans-fil, l'utilisation de transmissions de type MU-MIMO nécessite une duplication desdites données, de manière à ce que chacun des flux spatiaux (« spatial streams » en anglais) embarquent ledit même ensemble de données. Outre cette duplication de données, l'utilisation de transmissions de type MU-MIMO requiert que les terminaux sans-fil concernés soient suffisamment éloignés spatialement de manière à limiter les interférences, ce qui n'est pas toujours possible dans un contexte de réseau local sans-fil WLAN.

Il est aussi connu de pouvoir envoyer des données à plusieurs destinataires en utilisant des adresses dédiées de couche liaison, e.g. Ethernet MAC (« Médium Access Control » en anglais), ou de couche réseau, *e.g.* IP (« Internet Protocol » en anglais). Cependant, cette approche nécessite d'effectuer un décodage de couche liaison, ou respectivement de couche réseau, pour déterminer le destinataire effectif desdites données.

Il est souhaitable de pallier ces inconvénients de l'état de la technique. Il est ainsi souhaitable de fournir une solution qui permette d'effectuer des transmissions de données à plusieurs destinataires dans un réseau local sans-fil WLAN sans avoir à dupliquer lesdites données et en limitant les besoins de décodage au niveau des couches liaison et réseau (et des couches supérieures).

A cet effet, l'invention concerne un procédé de transmission de trame par un point d'accès d'un réseau local sans-fil, le point d'accès ayant effectué une phase d'association avec une pluralité de terminaux sans-fil. Le procédé est tel que le point d'accès reçoit, pendant la phase d'association, de chaque terminal sans-fil compatible avec des transmissions en mode point-à-multipoint une information indiquant que ledit terminal sans-fil est compatible avec des transmissions en mode point-à-multipoint. Et, pour transmettre la trame, le point d'accès effectue les étapes suivantes : obtenir des données à transmettre en mode point-à-multipoint à plusieurs destinataires parmi les terminaux sans-fil compatibles ; obtenir des données à transmettre en mode point-à-point à au moins un destinataire respectif parmi les terminaux sans-fil ; construire un entête de couche physique incluant : dans un champ commun de signalisation, une identification de chaque ressource canal destinée à être utilisée pour effectuer la transmission de trame que ce soit pour les données à transmettre en mode point-à-point ou en mode point-à-multipoint ; dans chaque champ d'une série de champs spécifiques de signalisation, une information représentative d'une association entre un identifiant de ressource canal utilisée et un unique identifiant de destinataire concerné ou de groupe de destinataires concernés, de telle sorte que chaque destinataire puisse déterminer chaque ressource canal à écouter pour recevoir les données qui lui sont adressées que ce soit en mode point-à-point ou en mode point-à-multipoint. Ainsi, il est possible de transmettre des données depuis le point d'accès vers plusieurs terminaux sans-fil sans avoir à effectuer de duplication de données et tout en restant au niveau de la couche physique pour identifier lesdites données.

Selon un mode de réalisation particulier, pour effectuer une transmission en mode point-à-multipoint vers plusieurs destinataires, le point d'accès effectue au préalable les étapes suivantes : recevoir un ordre de création de groupe à partir d'une liste de destinataires ; transmettre un identifiant de groupe à chaque destinataire dudit groupe. Et la série de champs spécifiques de signalisation est telle que, pour indiquer une transmission en mode point-à-multipoint sur une ressource canal, un unique champ spécifique est défini pour ladite ressource canal dans lequel est indiqué l'identifiant de groupe.

Selon un mode de réalisation particulier, la série de champs spécifiques de signalisation est telle que, pour indiquer une transmission en mode point-à-multipoint sur une ressource canal, autant de champs spécifiques de signalisation pour ladite ressource canal sont inclus dans l'entête de couche physique que de destinataires à ladite transmission en mode point-à-multipoint.

Selon un mode de réalisation particulier, l'entête de couche physique indique que la trame contient des données transmises en mode point-à-multipoint.

Selon un mode de réalisation particulier, chaque champ spécifique de signalisation indique s'il existe au moins un autre champ spécifique de signalisation, ultérieur dans l'entête de couche physique, qui est associé au même destinataire ou à au moins un destinataire du même groupe de destinataires.

Selon un mode de réalisation particulier, le point d'accès coopère avec un dispositif fournisseur de données de réalité virtuelle disposant d'une image immersive dans laquelle une pluralité d'utilisateurs peut s'immerger par le biais de terminaux sans-fil affichant des régions d'intérêt respectives de ladite image immersive, et le dispositif fournisseur de données de réalité virtuelle demande au point d'accès de transmettre dans la trame des données correspondant à une zone de recouvrement desdites régions d'intérêt en mode point-à-multipoint et le reste des données desdites régions d'intérêt en mode point-à-point.

Selon un mode de réalisation particulier, le dispositif fournisseur de données de réalité virtuelle effectue les étapes suivantes : calculer une fonction de coût relative à la zone de recouvrement ; comparer la fonction de coût calculée avec un seuil prédéfini ; demander au point d'accès de transmettre les données relatives à la zone de recouvrement en mode point-à-multipoint lorsque la fonction de coût calculée est inférieure au seuil prédéfini ; et demander au point d'accès de transmettre les données relatives à la zone de recouvrement en mode point-à-point lorsque la fonction de coût calculée est inférieure au seuil prédéfini.

Selon un mode de réalisation particulier, la fonction de coût est exprimée comme suit :

$$F = \frac{S_0}{\sum_{n=1}^{N} S_n}$$

où N représente la quantité de régions d'intérêt considérées, $S_0$ représente la taille de la zone de recouvrement, et $S_n$, $\forall 1 \leq n \leq N$, représente la taille des régions d'intérêt indexées par $n$.

Selon un mode de réalisation particulier, le dispositif fournisseur de données de réalité virtuelle effectue un alignement de la zone de recouvrement sur des frontières de macro-blocs.

Selon un mode de réalisation particulier, lorsqu'un premier ensemble de terminaux sans-fil présente des régions d'intérêt qui se chevauchent et définissent une première zone de recouvrement et un second ensemble de terminaux sans-fil présente des régions d'intérêt qui se chevauchent entre elles mais qui ne se chevauchent pas avec les régions d'intérêt du premier ensemble, le dispositif fournisseur de données de réalité virtuelle détermine la zone de recouvrement et calcule la fonction de coût indépendamment pour chaque ensemble de terminaux sans-fil.

Selon un mode de réalisation particulier, lorsqu'un premier ensemble de terminaux sans-fil présente des régions d'intérêt qui se chevauchent et définissent une zone de recouvrement et un second ensemble de terminaux sans-fil présente des régions d'intérêt qui ne se chevauchent pas entre elles et qui ne se chevauchent pas non plus avec les régions d'intérêt du premier ensemble, le dispositif fournisseur de données de réalité virtuelle détermine la zone de recouvrement et calcule la fonction de coût uniquement pour le premier ensemble de terminaux sans-fil, et demande au point d'accès de transmettre en mode point-à-point les données de la région d'intérêt de chaque terminal sans-fil du second ensemble.

Selon un mode de réalisation particulier, le dispositif fournisseur de données de réalité virtuelle effectue les étapes suivantes : prendre les régions d'intérêt deux à deux et en déterminer une éventuelle zone de recouvrement ; déterminer une liste triée des régions d'intérêt en fonction des zones de recouvrement déterminées, de sorte que les deux premiers éléments de la liste présentent la plus grande zone de recouvrement et les régions d'intérêt sont ensuite triées en ajoutant successivement à la liste la région d'intérêt qui présente la plus grande zone de recouvrement avec le dernier élément de la liste ; effectuer au moins une itération des étapes suivantes : déterminer une éventuelle zone de recouvrement commune à toutes les régions d'intérêt présentes dans la liste ; calculer une fonction de coût pour la zone de recouvrement commune déterminée, et si aucune zone de recouvrement commune n'a pu être déterminée, considérer la fonction de coût comme supérieure à un seuil prédéfini ; décider qu'une transmission en mode point-à-multipoint est possible pour les données de la zone de recouvrement commune lorsque la fonction de coût est inférieure au seuil prédéfini ; exclure de la liste la région d'intérêt listée en dernière position lorsque la fonction de coût est supérieure ou égale au seuil prédéfini et effectuer une nouvelle itération.

Selon un mode de réalisation particulier, le dispositif fournisseur de données de réalité virtuelle est une passerelle résidentielle.

Selon un mode de réalisation particulier, la trame est transmise par le point d'accès selon une technique de type OFDMA.

Selon un mode de réalisation particulier, le réseau local sans-fil est de type Wi-Fi.

L'invention concerne également un point d'accès d'un réseau local sans-fil, le point d'accès étant adapté pour effectuer une transmission de trame dans ledit réseau local sans-fil, le point d'accès ayant effectué une phase d'association avec une pluralité de terminaux sans-fil. Le point d'accès comporte des moyens pour recevoir, pendant la phase d'association, de chaque terminal sans-fil compatible avec des transmissions en mode point-à-multipoint une information indiquant que ledit terminal sans-fil est compatible avec des transmissions en mode point-à-multipoint ; et, pour transmettre la trame, le point d'accès comporte : des moyens pour obtenir des données à transmettre en mode point-à-multipoint à plusieurs destinataires parmi les terminaux sans-fil compatibles ; des moyens pour obtenir des données à transmettre en mode point-à-point à au moins un destinataire respectif parmi les terminaux sans-fil ; des moyens pour construire un entête de couche physique incluant : dans un champ commun de signalisation, une identification de chaque ressource canal destinée à être utilisée pour effectuer la transmission de trame que ce soit pour les données à transmettre en mode point-à-point ou en mode point-à-multipoint ; dans chaque champ d'une série de champs spécifiques de signalisation, une information représentative d'une association entre un identifiant de ressource canal utilisée et un unique identifiant de destinataire concerné ou de groupe de destinataires concernés, de telle sorte que chaque destinataire puisse déterminer chaque ressource canal à écouter pour recevoir les données qui lui sont adressées que ce soit en mode point-à-point ou en mode point-à-multipoint.

L'invention concerne également un produit programme d'ordinateur comportant des instructions pour implémenter, par un processeur, le procédé ci-dessus, lorsque ledit programme est exécuté par ledit processeur. L'invention concerne également un support de stockage d'informations stockant un programme d'ordinateur comprenant des instructions pour implémenter, par un processeur, le procédé ci-dessus, lorsque ledit programme est exécuté par ledit processeur.

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

- la Fig. 1 illustre schématiquement un système de communication dans lequel la présente invention peut être implémentée ;
- la Fig. 2 illustre schématiquement un exemple d'architecture matérielle d'un dispositif de communication du système de communication ;
- la Fig. 3A illustre schématiquement des échanges, entre un point d'accès et des terminaux sans-fil, dans le cadre d'une phase d'association dans le système de communication ;
- la Fig. 3B illustre schématiquement des échanges, entre le point d'accès et des terminaux sans-fil, dans le cadre d'une définition de groupe dans le système de communication ;
- la Fig. 4 illustre schématiquement un algorithme de transmission de trames par le point d'accès ;
- la Fig. 5 illustre schématiquement une structure d'entête de couche physique utilisé pour la transmission de trames, dans un mode de réalisation particulier ;
- la Fig. 6 illustre schématiquement un environnement d'utilisation d'un terminal sans-fil de réalité virtuelle ;
- la Fig. 7A illustre schématiquement un premier exemple de chevauchement de régions d'intérêt de plusieurs terminaux sans-fil de réalité virtuelle ;
- la Fig. 7B illustre schématiquement un second exemple de chevauchement de régions d'intérêt de plusieurs terminaux sans-fil de réalité virtuelle ;

- la Fig. 8 illustre schématiquement un algorithme de répartition de données par un dispositif fournisseur de contenu de réalité virtuelle ; et
- la Fig. 9 illustre schématiquement un algorithme de détermination de zone de recouvrement appropriée pour une transmission point-à-multipoint, dans un mode de réalisation particulier.

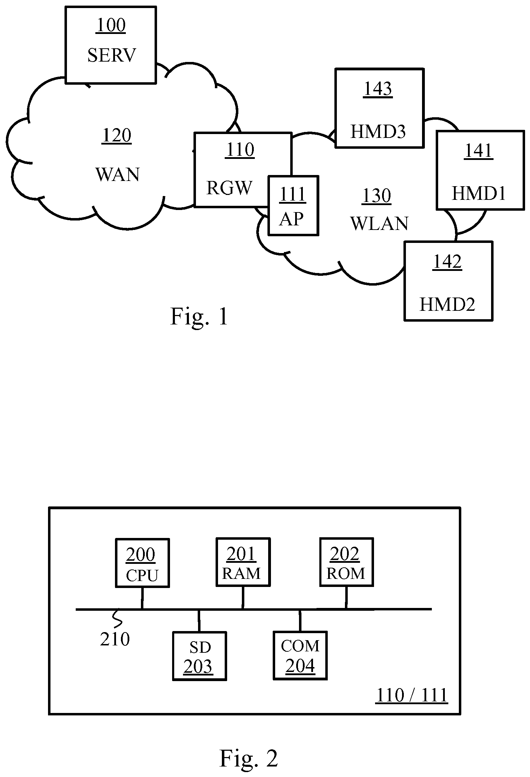

La **Fig. 1** illustre schématiquement un système de communication dans lequel la présente invention peut être implémentée.

Le système de communication comporte une passerelle résidentielle RGW (« Residential GateWay » en anglais) 110 coopérant avec un point d'accès AP (« Access Point » en anglais) 111. Le point d'accès AP 111 est préférentiellement intégré à la passerelle résidentielle RGW 110. Le point d'accès AP 111 met en place un réseau local sans-fil WLAN (« Wireless Local Areas Network » en anglais) 130 auquel une pluralité de terminaux sans-fils sont susceptibles de se connecter, par exécution d'une phase d'association avec le point d'accès AP 111. Ces terminaux sans-fil sont des consommateurs de données fournies par la passerelle résidentielle RGW 110 par le biais du point d'accès AP 111. De tels terminaux sans-fil sont par exemple des terminaux de réalité virtuelle adaptés pour immerger des utilisateurs dans un environnement de réalité virtuelle. Plus particulièrement, ces terminaux sans-fil sont par exemple des casques immersifs ou des paires de lunettes immersives, qui sont équipé(e)s d'un ou plusieurs écrans intégrés agencés de sorte à être placés devant les yeux des utilisateurs qui les portent. Par exemple, dans le cas de lunettes immersives, un écran fait face à chaque œil de l'utilisateur. On parle plus généralement de dispositifs de type HMD (« Head Mounted Display » en anglais). Trois terminaux HMD1 141, HMD2 142, HMD3 143 sont ainsi représentés de manière illustrative sur la Fig. 1. Ces trois terminaux sans-fil sont alors destinés à recevoir des données, plus particulièrement des portions d'image encodées dans le cas de terminaux de réalité virtuelle, en provenance de la passerelle résidentielle RGW 110 par le biais du point d'accès AP 111.

Préférentiellement, le réseau local sans-fil WLAN 130 est de type Wi-Fi.

Les données qui sont fournies par la passerelle résidentielle RGW 110 aux terminaux sans-fil peuvent être générées par la passerelle résidentielle RGW 110 elle-même, ou récupérées en mémoire par la passerelle résidentielle RGW 110, ou reçues par passerelle résidentielle RGW 110 depuis un équipement tiers. Par exemple, ces données proviennent d'un serveur SERV 100 via un réseau étendu WAN (« Wide Area Network » en anglais) 120.

La passerelle résidentielle RGW 110 est un exemple illustratif préférentiel de fourniture de données à une pluralité de terminaux sans-fil dans le réseau local sans-fil WLAN 130. D'autres implémentations de dispositifs fournisseurs de données sont possibles dans le cadre de la présente invention, comme par exemple un lecteur multimédia, tel qu'un lecteur de disques Blu-Ray, ou un serveur de données de type NAS (« Network Attached Storage » en anglais), ou une console de jeux.

La **Fig. 2** illustre schématiquement un exemple d'architecture matérielle d'un dispositif de communication du système de communication. Ce dispositif de communication est la passerelle résidentielle RGW 110, ou le point d'accès AP 111, ou la passerelle résidentielle RGW 110 incluant le point d'accès AP 111.

Le dispositif de communication considéré comporte, reliés par un bus de communication 210 : un processeur CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un lecteur de cartes SD (« Secure Digital » en anglais) 203 ou un disque dur HDD (« Hard Disk Drive » en anglais) ; et au moins une interface de communication COM 204.

Lorsque l'architecture matérielle représente la passerelle résidentielle RGW 110, l'interface de communication COM 204 permet à la passerelle résidentielle RGW 110 de communiquer et coopérer avec le point d'accès AP1 111, afin de communiquer au sein du réseau local sans-fil WLAN 130. L'interface de communication COM 204 permet aussi à la passerelle résidentielle RGW 110 de communiquer via le réseau étendu WAN 120, notamment avec le serveur SERV 100.

Lorsque l'architecture matérielle représente le point d'accès AP1 111, l'interface de communication COM 204 permet au point d'accès AP1 111 de gérer le réseau local sans-fil WLAN 130 et de communiquer via le réseau local sans-fil WLAN 130 avec des terminaux sans-fil. L'interface de communication COM 204 permet aussi au point d'accès AP1 111 de communiquer et coopérer avec la passerelle résidentielle RGW 110, afin de permettre à la passerelle résidentielle RGW 110 de communiquer au sein du réseau local sans-fil WLAN 130.

Lorsque l'architecture matérielle représente la passerelle résidentielle RGW 110 incluant le point d'accès AP1 111, l'interface de communication COM 204 permet à la passerelle résidentielle RGW 110 de communiquer via le réseau étendu WAN 120, notamment avec le serveur SERV 100. L'interface de communication COM 204 permet aussi à la passerelle résidentielle RGW 110, par le biais de son point d'accès AP1 111, de gérer le réseau local sans-fil WLAN 130 et de communiquer via le réseau local sans-fil WLAN 130 avec des terminaux sans-fil.

Le processeur CPU 200 est capable d'exécuter des instructions chargées dans la mémoire RAM 201 à partir de la mémoire ROM 202, d'une mémoire externe (telle qu'une carte SD), d'un support de stockage (tel qu'un disque dur HDD), ou d'un réseau de communication (tel que le réseau étendu WAN 120). Lors de la mise sous tension, le processeur CPU 200 est capable de lire de la mémoire RAM 201 des instructions et de les exécuter. Ces instructions forment un programme d'ordinateur causant la mise en œuvre, par le processeur CPU 200, de tout ou partie des algorithmes et étapes décrits ci-après en relation avec le dispositif que ladite architecture matérielle représente.

Ainsi, tout ou partie des algorithmes et étapes décrits ci-après peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, la passerelle résidentielle RGW 110 et/ou le point d'accès AP1 111 comportent de la circuiterie électronique adaptée pour implémenter les algorithmes et étapes décrits ci-après.

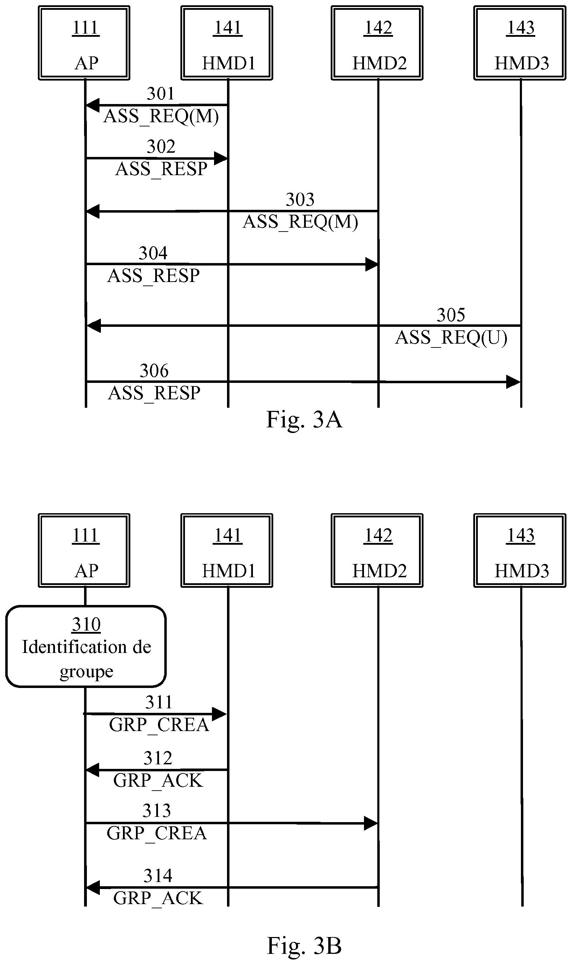

La **Fig. 3A** illustre schématiquement des échanges, entre le point d'accès AP 111 et des terminaux sans-fil, tels que les terminaux HMD1 141, HMD2 142, HMD3 143, dans le cadre d'une phase d'association dans le système de communication.

Dans une étape 301, le terminal sans-fil HMD1 141 détecte le réseau local sans-fil WLAN 130 grâce par exemple à des balises (« beacon » en anglais) émises par le point d'accès AP1 111, et envoie une requête d'association ASS_REQ au point d'accès AP1 111 de sorte à être connecté au réseau local sans-fil WLAN 130. La requête d'association ASS_REQ contient une information M indiquant que le terminal sans-fil HMD1 141 est compatible, en tant que récepteur sans-fil, avec des transmissions en mode point-à-multipoint (« multicast » en anglais).

Dans une étape 302, le point d'accès AP 111 répond à la requête d'association ASS_REQ par une réponse ASS_RESP. La réponse ASS_RESP inclut préférentiellement un identifiant d'association AID (« Association IDentifier » en anglais) unique pour le terminal sans-fil HMD1 141 dans le réseau local sans-fil WLAN 130. Le point d'accès AP 111 affecte ainsi une adresse physique au terminal sans-fil HMD1 141 de sorte à notamment permettre ultérieurement au terminal sans-fil HMD1 141 de repérer dans des trames transmises par le point d'accès AP 111 quelles sont les données qui sont spécifiquement adressées au terminal sans-fil HMD1 141. Suite à l'étape 302, le point d'accès AP 111 mémorise que le terminal sans-fil HMD1 141 est connecté et est compatible, en tant que récepteur sans-fil, avec des transmissions en mode point-à-multipoint. Le point d'accès AP 111 en informe la passerelle résidentielle RGW 110.

Dans une étape 303, le terminal sans-fil HMD2 142 détecte aussi le réseau local sans-fil WLAN 130, et envoie une requête d'association ASS_REQ au point d'accès AP1 111 de sorte à être connecté au réseau local sans-fil WLAN 130. La requête d'association ASS_REQ contient l'information M indiquant que le terminal sans-fil HMD2 142 est compatible, en tant que récepteur sans-fil, avec des transmissions en mode point-à-multipoint.

Dans une étape 304, le point d'accès AP 111 répond à la requête d'association ASS_REQ par une réponse ASS_RESP. La réponse ASS_RESP inclut préférentiellement un identifiant d'association AID unique pour le terminal sans-fil HMD2 142 dans le réseau local sans-fil WLAN 130. Suite à l'étape 304, le point d'accès AP 111 mémorise que le terminal sans-fil HMD2 142 est connecté et est compatible, en tant que récepteur sans-fil, avec des transmissions en mode point-à-multipoint. Le point d'accès AP 111 en informe la passerelle résidentielle RGW 110.

Dans une étape 305, le terminal sans-fil HMD3 143 détecte aussi le réseau local sans-fil WLAN 130, et envoie une requête d'association ASS_REQ au point d'accès AP1 111 de sorte à être connecté au réseau local sans-fil WLAN 130. La requête d'association ASS_REQ ne contient pas l'information M indiquant que le terminal sans-fil HMD3 143 serait compatible, en tant que récepteur sans-fil, avec des transmissions en mode point-à-multipoint. En variante, la requête d'association ASS_REQ contient une information indiquant que le terminal sans-fil HMD3 143 n'est compatible qu'avec les transmissions en mode point-à-point et éventuellement avec les transmissions par diffusion («broadcast » en anglais).

Dans une étape 306, le point d'accès AP 111 répond à la requête d'association ASS_REQ par une réponse ASS_RESP. La réponse ASS_RESP inclut préférentiellement un identifiant d'association AID unique pour le terminal sans-fil HMD3 143 dans le réseau local sans-fil WLAN 130. Suite à l'étape 306, le point d'accès AP 111 mémorise que le terminal sans-fil HMD3 143 est connecté et n'est pas compatible, en tant que récepteur sans-fil, avec des transmissions en mode point-à-multipoint. Le point d'accès AP 111 en informe la passerelle résidentielle RGW 110.

D'autres procédures entre le point d'accès AP 111 et les terminaux sans-fil peuvent faire suite à la phase d'association, comme par exemple des procédures d'authentification. Il est en outre possible pour le point d'accès AP 111 d'indiquer dans chaque balise émise, ou lors d'échanges avec les terminaux sans-fil (par exemple dans le cadre de la phase d'association), que le point d'accès AP 111 a la capacité d'effectuer des transmissions en mode point-à-multipoint.

La passerelle résidentielle RGW 110 est ainsi informée que les terminaux sans-fil HMD1 141, HMD2 142, HMD3 143 sont connectés au réseau local sans-fil WLAN 130, et de leurs capacités respectives vis-à-vis des transmissions en mode point-à-multipoint. La passerelle résidentielle RGW 110 identifie que les terminaux sans-fil HMD1 141, HMD2 142, HMD3 143 sont destinataires de données fournies par ladite passerelle résidentielle RGW 110. Par exemple, une application, telle qu'une application de réalité virtuelle, est exécutée sur la passerelle résidentielle RGW 110, et les terminaux sans-fil HMD1 141, HMD2 142, HMD3 143 sont de type compatible avec ladite application.

Comme détaillé ci-après, deux approches d'identification de données transmises en mode point-à-multipoint sont proposées. Une première approche consiste à s'appuyer sur une liste d'identifiants des terminaux sans-fil auxquels sont adressées lesdites données. Les identifiants AID mentionnés ci-dessus sont préférentiellement utilisés pour ce faire. Une seconde approche consiste à s'appuyer sur des identifiants de groupe MID («Multicast IDentifier» en anglais).

La **Fig. 3B** illustre schématiquement des échanges, entre le point d'accès AP 111 et des terminaux sans-fil, tels que les terminaux HMD1 141, HMD2 142, HMD3 143, dans le cadre d'une définition de groupe dans le système de communication.

La passerelle résidentielle RGW 110 ordonne au point d'accès AP 111 de créer un groupe pour les terminaux sans-fil HMD1 141, HMD2 142 suite aux échanges décrits ci-dessus en relation avec la Fig. 3A. Ainsi, dans une étape 310, le point d'accès AP 111 identifie qu'un nouveau groupe doit être créé pour les terminaux HMD1 141, HMD2 142. Le terminal HMD3 143 est en effet exclu du groupe, du fait de son incapacité à recevoir des données par transmission en mode point-à-multipoint d'après les échanges décrits ci-dessus en relation avec la Fig. 3A.

Dans une étape 311, le point d'accès AP 111 transmet au terminal HMD1 141 un message de notification de création de groupe GRP_CREA incluant un identifiant de groupe MID. Le point d'accès AP 111 affecte ainsi un équivalent d'adresse physique au groupe en question, de sorte à permettre ultérieurement au terminal sans-fil HMD1 141 de repérer dans des trames transmises par le point d'accès AP 111 quelles sont les données qui sont adressées au groupe en question, auquel appartient le terminal sans-fil HMD1 141. Dans un mode de réalisation particulier, l'identifiant de groupe MID est au même format que les identifiants AID susmentionnés et est de valeur distincte des identifiants AID affectés de manière unique aux terminaux sans-fil du réseau local sans-fil WLAN 130 (et de valeur distincte de tout autre groupe précédemment créé par le point d'accès AP 111). En d'autres termes, le point d'accès AP 111 pioche les identifiants AID et MID dans une réserve commune (« pool » en anglais) d'identifiants et les attribue de manière unique.

Dans une étape 312, le terminal HMD1 141 transmet un message d'acquittement GRP_ACK au point d'accès AP 111 en réponse au message de notification de création de groupe GRP_CREA de l'étape 311.

Dans une étape 313, le point d'accès AP 111 transmet au terminal HMD2 142 un message de notification de création de groupe GRP_CREA dans lequel le point d'accès AP 111 inclut le même identifiant de groupe MID que pour le terminal HMD1 141.

Dans une étape 314, le terminal HMD2 142 transmet un message d'acquittement GRP ACK au point d'accès AP 111 en réponse au message de notification de création de groupe GRP_CREA de l'étape 313.

Le point d'accès AP 111 informe la passerelle résidentielle RGW 110 de la bonne conduite de la création de groupe et partage avec la passerelle résidentielle RGW 110 une information permettant d'identifier le groupe en question. Par exemple, le point d'accès AP 111 fournit à la passerelle résidentielle RGW 110 l'identifiant de groupe MID attribué.

Dans un mode de réalisation particulier, lorsque la passerelle résidentielle RGW 110 détecte que plus de deux terminaux sans-fil sont destinataires de données fournies par ladite passerelle résidentielle RGW 110, ladite passerelle résidentielle RGW 110 demande au point d'accès AP 111 de créer une multitude de groupes de sorte à pouvoir transmettre des données en mode point-à-multipoint à différents ensembles de terminaux sans-fil parmi lesdits terminaux sans-fil connectés au réseau local sans-fil WLAN 130. Par exemple, la passerelle résidentielle RGW 110 demande au point d'accès AP 111 de créer autant de groupes qu'il y a de regroupements possibles entre lesdits terminaux sans-fil, ce qui revient à une quantité de groupes définie par :

$$\sum_{n=2}^{N} C_N^n = \sum_{n=2}^{N} \frac{n!}{N!\,(N-n)!}$$

où $N$ représente la quantité de terminaux sans-fil destinataires desdites données fournies par la passerelle résidentielle RGW 110. La passerelle résidentielle RGW 110 peut choisir de ne créer que certains groupes parmi tous les groupes possibles, et donc ne considérer pouvoir faire des transmissions en mode point-à-multipoint uniquement parmi ces groupes choisis.

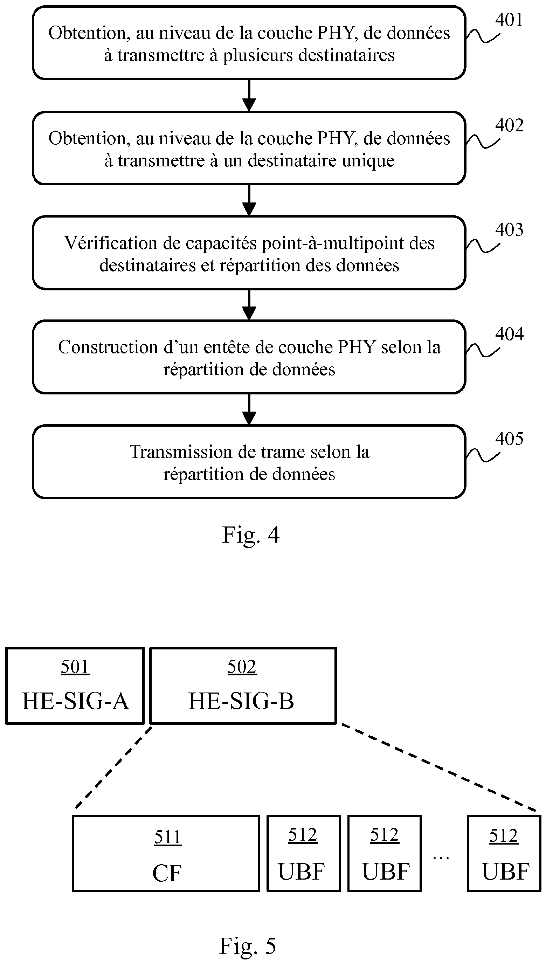

La Fig. 4 illustre schématiquement un algorithme de transmission de trame par le point d'accès AP 111.

Dans une étape 401, le point d'accès AP 111 obtient au niveau de sa couche physique (PHY) des données à transmettre à plusieurs destinataires. Ces données proviennent de couches supérieures du point d'accès AP 111 et ont été préalablement fournies au point d'accès AP 111 par la passerelle résidentielle RGW 110. La passerelle résidentielle RGW 110 a aussi préalablement indiqué au point d'accès AP 111 quels sont les terminaux sans-fil destinataires desdites données. Si un groupe a préalablement été créé pour lesdits destinataires, la passerelle résidentielle RGW 110 utilise l'identifiant de groupe MID partagé avec le point d'accès AP 111, pour désigner les destinataires en question. Une liste d'identifiants des destinataires en question peut aussi être utilisée, le point d'accès AP 111 étant à même de retrouver à quel groupe ces destinataires correspondent.

Dans une étape 402, le point d'accès AP 111 obtient au niveau de sa couche physique (PHY) des données à transmettre à des destinataires uniques, donc à transmettre en mode point-à-point. Ces données proviennent de couches supérieures du point d'accès AP 111 et ont été préalablement fournies au point d'accès AP 111 par la passerelle résidentielle RGW 110. La passerelle résidentielle RGW 110 a aussi préalablement informé le point d'accès AP 111 des terminaux sans-fil qui sont destinataires uniques desdites données.

A noter que des données à transmettre en mode point-à-multipoint obtenues à l'étape 401 et/ou des données à transmettre en mode point-à-point obtenues à l'étape 402 peuvent avoir été fournies au point d'accès AP 111 par un ou plusieurs autres équipements du système de communication que la passerelle résidentielle RGW 110. Le point d'accès AP 111 effectue en effet les transmissions en voie descendante (« downlink transmissions » en anglais) pour toute la couverture du réseau local sans-fil WLAN 130.

Dans une étape optionnelle 403, le point d'accès AP 111 vérifie les capacités, vis-à-vis des transmissions en mode point-à-multipoint, de chaque destinataire concerné par les données obtenues à l'étape 401. Si le point d'accès AP 111 se rend compte qu'un ou plusieurs destinataires n'ont pas les capacités de recevoir des transmissions en mode point-à-multipoint, le point d'accès AP 111 considère que les données en question doivent être dupliquées et transmises en mode point-à-point à chaque destinataire ainsi concerné. Une nouvelle répartition de données est ainsi mise en place (plus de données à transmettre en mode point-à-point). Les autres destinataires peuvent toutefois recevoir les données en question selon une transmission en mode point-à-multipoint. A noter qu'utiliser un identifiant de groupe MID partagé entre la passerelle résidentielle RGW 110 et le point d'accès AP 111 permet de se dispenser de cette étape 403. A noter aussi que cette vérification peut être effectuée en amont par la passerelle résidentielle RGW 110.

Dans une étape 404, le point d'accès AP 111 construit un entête de couche physique (PHY) adapté pour effectuer une transmission en mode point-à-point des données obtenues à l'étape 402 et une transmission en mode point-à-multipoint des données obtenues à l'étape 401 (en prenant en compte l'éventuelle nouvelle répartition issue de l'étape optionnelle 403). L'entête de couche physique (PHY) indique quelles ressources canal sont utilisées pour transmettre des données qui sont adressées à un unique destinataire et identifie quel est ce destinataire, et indique quelles ressources canal sont utilisées pour transmettre des données qui sont adressées à plusieurs destinataires et identifie quels sont ces destinataires ou à quel groupe de destinataires lesdites données sont adressées. Il est avantageux d'indiquer, au niveau de l'entête de couche physique (PHY), quelles sont les ressources canal utilisées pour les transmissions de mode point-à-point et les ressources canal utilisées pour les transmissions en mode point-à-multipoint, car cela évite à chaque destinataire d'avoir à effectuer des décodages de couches supérieures (couche liaison, couche réseau,...) pour déterminer quelles sont les données à récupérer au sein de la trame par ledit destinataire.

Préférentiellement, le point d'accès AP 111 utilise un formatage d'entête de couche physique (PHY) selon l'amendement IEEE 802.11ax relatif à la norme IEEE 802.11 (définissant ce qui est communément appelé « technologie Wi-Fi »). Des aménagements sont effectués par rapport à l'amendement IEEE 802.11ax (version « Draft 2.0 »), pour supporter les transmissions en mode point-à-multipoint, comme détaillé ci-après en relation avec la Fig. 5.

Dans une étape 405, le point d'accès AP 111 effectue la transmission de trame en incluant l'entête construit à l'étape 404 et les données obtenues aux étapes 402 et 403. Les données obtenues aux étapes 402 et 403 sont transmises sur les ressources canal identifiées dans l'entête de couche physique. Par exemple, les transmissions sont effectuées selon une technique de type OFDMA (« Orthogonal Frequency-Division Multiple Access » en anglais).

La Fig. 5 illustre schématiquement une structure d'entête de couche physique (PHY) utilisé pour la transmission de trames par le point d'accès AP 111, dans un mode de réalisation particulier.

Dans ce mode de réalisation particulier, le format d'entête multi-utilisateur de couche physique (PHY) de l'amendement IEEE 802.11ax (version « Draft 2.0 ») est utilisé. Selon ce format, l'entête de couche physique (PHY) comporte deux champs de signalisation HE-SIG-A 501 et HE-SIG-B 502. L'entête de couche physique (PHY) comporte d'autres champs non représentés.

Le champ de signalisation HE-SIG-A 501 est destiné à fournir des informations communes à l'ensemble des terminaux sans-fil, notamment des informations de largeur de bande utilisée (20 Mhz ; 40 MHz ; 80 MHz), des informations de schéma de modulation et de codage MCS (« Modulation and Coding Scheme » en anglais) utilisé pour le champ de signalisation HE-SIG-B 502, la taille en symboles du champ de signalisation HE-SIG-B 502, et une information indiquant si la transmission s'effectue en mode SU-MIMO (« Single User - Multiple Inputs Multiple Outputs » en anglais) ou en mode MU-MIMO.

A noter que la notion de transmission MU-MIMO est distincte de la notion de transmission en mode point-à-multipoint adressée dans le présent document. En effet, la notion de transmission en mode point-à-multipoint implique qu'un même ensemble de données est transmis une unique fois à différents destinataires (sans duplication), alors que la notion de transmission MU-MIMO implique que plusieurs transmissions simultanées sont effectuées vers des destinataires distincts en utilisant des flux spatiaux distincts, ce qui signifie que pour transmettre un même ensemble de données à plusieurs destinataires des duplications sont réalisées pour que ces flux spatiaux embarquent ledit même ensemble de données.

Le champ de signalisation HE-SIG-B 502 est destiné à fournir des informations complémentaires au champ de signalisation HE-SIG-A 501, spécifiques aux destinataires des données (de couches supérieures) incluses dans la trame. Plus particulièrement, le champ de signalisation HE-SIG-B 502 est composé d'un champ commun CF (« Common Field » en anglais) 511 et d'une série de champs spécifiques, appelés champs utilisateur UBF (« User Block Field » en anglais) 512. Le champ commun CF 511 notifie quelles ressources canal sont utilisées pour transmettre lesdites données (de couches supérieures) auxdits destinataires, que ce soit en mode point-à-point ou en mode point-à-multipoint. La série de champs utilisateur UBF 512 sert notamment à indiquer l'association effectuée entre ressources canal (aussi appelées RU (« Resource Unit » en anglais)) et destinataires des données transportées dans ces ressources canal répertoriées dans le champ commun CF 511. Chaque champ utilisateur UBF 512 est formaté dans l'amendement IEEE 802.11ax (version « Draft 2.0 ») de telle sorte qu'un seul identifiant d'association AID peut être précisé pour la ressource canal concernée.

Selon un premier mode de réalisation, chacun des champs utilisateur UBF 512 fournit une association entre un unique identifiant de ressource canal et un unique identifiant de terminal sans-fil, de sorte qu'une même ressource canal est identifiée dans plusieurs champs utilisateur UBF 512 lorsque ladite ressource canal est utilisée en mode point-à-multipoint. L'identifiant d'association AID est préférentiellement utilisé comme identifiant de terminal sans-fil. Ainsi, lorsque plusieurs destinataires doivent récupérer les données transmises sur une même ressource canal, l'entête de couche physique (PHY) contient autant de champs utilisateur UBF 512 associés à cette ressource canal que de destinataires des données transmises sur une cette ressource canal. Dans un mode de réalisation préférentiel, le champ commun CF 511 indique en outre combien de destinataires sont adressés pour chaque ressource canal utilisée pour la transmission desdites données.

Selon un second mode de réalisation, chacun des champs utilisateur UBF 512 fournit une association entre un unique identifiant de ressource canal et un unique identifiant de terminal sans-fil, de sorte que chaque ressource canal utilisée n'est identifiée que dans un seul champ utilisateur UBF 512, même lorsque ladite ressource canal est utilisée en mode point-à-multipoint. Ce second mode s'appuie sur les identifiants de groupe MID susmentionnés. Ainsi, chaque destinataire, compatible en tant que récepteur, avec les transmissions en mode point-à-multipoint recherche au moins deux identifiants dans les champs utilisateur UBF 512 : son propre identifiant AID et chaque identifiant de groupe MID qui lui a été communiqué par le point d'accès AP 111 (voir Fig. 3B). Il n'est dans ce cas pas utile d'indiquer dans le champ commun CF 511 combien de destinataires sont adressés pour chaque ressource canal utilisée pour la transmission desdites données.

Les champs utilisateur UBF 512 sont ainsi formatés de telle sorte que chaque destinataire peut déterminer chaque ressource canal à écouter pour recevoir les données qui lui sont adressées que ce soit en mode point-à-point ou en mode point-à-multipoint.

Il peut en outre être souhaitable d'indiquer dans l'entête de couche physique (PHY) que la trame est une trame contenant des données transmises en mode point-à-multipoint.

Cette indication peut se faire dans le champ de signalisation HE-SIG-A 501, par exemple en utilisant le bit B7 de son sous-champ de signalisation HE-SIG-A2 indiqué comme « réservé » dans l'amendement IEEE 802.1 1ax (version « Draft 2.0 ») pour les transmissions au format multiutilisateurs (HE MU PPDU, pour « High Efficiency Multi-User PLCP Protocol Data Unit » en anglais, où « PLCP » signifie « Physical Layer Convergence Procédure »). Ainsi, lorsque ledit bit B7 est mis à « 1 », cela signifie que la trame ne concerne que des transmissions en mode point-à-point ou des transmissions en mode de diffusion ; et lorsque le bit B7 est mis à « 0 », cela signifie que la trame concerne au moins une transmission en mode point-à-multipoint.

En variante de réalisation, l'indication que la trame contient des données transmises en mode point-à-multipoint peut être incluse dans chaque champ utilisateur UBF 512 concerné, par exemple en utilisant le bit B19 indiqué comme «réservé » dans l'amendement IEEE 802.11ax (version « Draft 2.0 »). Ainsi, lorsque le bit B19 est mis à « 0 », cela signifie que la ressource canal identifiée par le champ utilisateur UBF 512 en question concerne une transmission en mode point-à-point ou une transmission en mode diffusion ; et lorsque le bit B19 est mis à « 1 », cela signifie que la ressource canal identifiée par le champ utilisateur UBF 512 en question concerne au moins une transmission en mode point-à-multipoint. A noter que les deux variantes présentées ci-dessus peuvent être cumulées. Un avantage de l'approche utilisant ledit bit B19 est d'éviter des situations où un terminal sans-fil, non compatible avec les transmissions point-à-multipoint, rejette la trame à cause dudit bit B7 du sous-champ de signalisation HE-SIG-A2 qui n'aurait pas la valeur réservée attendue.

Selon un autre aspect, ledit bit B19 peut servir à indiquer qu'il existe au moins une autre ressource canal associée au même terminal sans-fil que celui identifié dans le champ utilisateur UBF 512 en question ou qu'il existe au moins une autre ressource canal associée à un terminal sans-fil appartenant au groupe identifié dans le champ utilisateur UBF 512 en question. Cela permet notamment d'indiquer à chaque terminal sans-fil concerné qu'il est nécessaire de continuer à scruter le reste de l'entête de couche physique pour identifier une ou plusieurs autres ressources canal utilisées pour transmettre des données audit terminal sans-fil. D'une manière générale, cela permet d'affecter des ressource canal non-contiguës à un même terminal sans-fil. Pour ce faire, lorsque le point d'accès AP 111 crée un champ utilisateur UBF 512, le point d'accès AP 111 vérifie s'il existe encore au moins une autre ressource canal, non encore déclarée dans le(s) champ(s) utilisateur UBF 512 défini(s) jusqu'alors pour la trame en question, attribuée à au moins un terminal sans-fil identifié dans ledit champ utilisateur UBF 512 en création. Si tel est le cas, le point d'accès AP 111 met ledit bit B19 à « 1 » ; sinon le point d'accès AP 111 met ledit bit B19 à « 0 ». En d'autres termes, chaque champ utilisateur UBF 512 indique s'il existe au moins un autre champ utilisateur UBF 512, ultérieur dans l'entête de couche physique, qui est associé au même destinataire ou à au moins un destinataire du même groupe de destinataires. Un avantage de cet autre aspect est que, même pour des transmissions point-à-point uniquement, des ressources canal non contiguës peuvent être allouées et signalées à un destinataire, afin par exemple d'éviter certaines ressources canal interférées pour ce destinataire. Ce dernier peut, lorsqu'il arrive au décodage du dernier champ utilisateur UBF 512 lui étant adressé (ledit bit B19 à « 0 »), arrêter de décoder le champ de signalisation HE-SIG-B et ainsi économiser du temps et des ressources énergétiques.

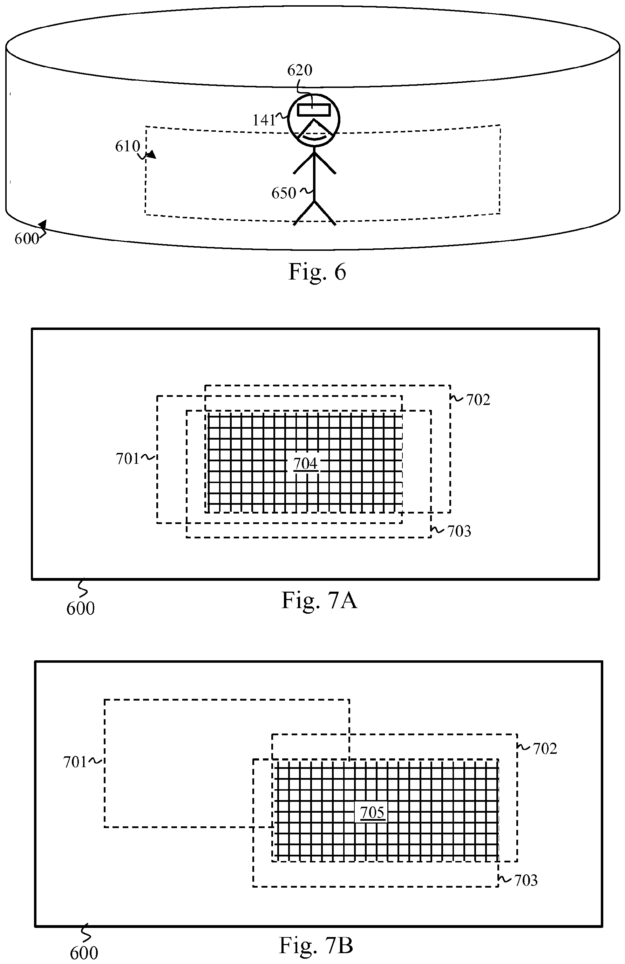

Au vu de ce qui précède, il est ainsi possible d'effectuer des transmissions en mode point-à-multipoint dans un réseau local sans-fil WLAN. Un contexte d'utilisation des mécanismes détaillés ci-dessus est présenté ci-après en relation avec les Figs. 6 à 9.

La Fig. 6 illustre schématiquement un environnement d'utilisation d'un terminal sans-fil de réalité virtuelle, tels que les terminaux HMD1 141, HMD2 142 et HMD3 143. La passerelle résidentielle RGW 110 sert, dans ce contexte, de fournisseur de données relatives à une image immersive 600. La passerelle résidentielle RGW 110 définit une forme géométrique simple (ici un cylindre creux, mais d'autres formes sont possibles, telles qu'une demi-sphère ou un dôme) sur laquelle est virtuellement plaquée l'image immersive 600. Chaque utilisateur 650 portant un des terminaux HMD1 141, HMD2 142 et HMD3 143 ne voit, à chaque instant, par le biais d'un afficheur 620 du terminal HMD1 141, HMD2 142 ou HMD3 143 en question qu'une portion 610 de l'image immersive 600. Lorsque l'utilisateur 650 bouge la tête, c'est-à-dire que l'utilisateur 650 change de point de vue, une autre portion de l'image immersive 600 lui est affichée par le terminal HMD1 141, HMD2 142 ou HMD3 143 en question. Typiquement, lorsque plusieurs utilisateurs sont immergés en réalité virtuelle, chaque utilisateur a son propre point de vue, et donc des portions différentes de l'image immersive 600 leur sont respectivement affichées. On parle de différentes « régions d'intérêt » ROI (« Région Of interest » en anglais). Chacune de ces régions d'intérêt ROI est définie d'après des informations représentatives du point de vue observé par l'utilisateur considéré dans l'image immersive 600. Une manière de définir un tel point de vue dans l'image immersive 600 est de fournir un azimut, un angle d'élévation et un éloignement par rapport à une position prédéfinie dans l'espace suite à une opération de calibration. Ces informations représentatives du point de vue observé sont transmises en temps-réel par les terminaux HMD1 141, HMD2 142 et HMD3 143 à la passerelle résidentielle RGW 110 via le réseau local sans-fil WLAN 130. En conséquence, la passerelle résidentielle RGW 110 détermine quelles sont les régions d'intérêts ROI correspondantes et transmet aux terminaux HMD1 141, HMD2 142 et HMD3 143, via le point d'accès AP 111, des données de l'image immersive 600 qui permettent à chacun des terminaux HMD1 141, HMD2 142 et HMD3 143, après décodage, d'afficher la région d'intérêt ROI en question à leur utilisateur.

Ces différentes régions d'intérêt ROI ont toutefois généralement une zone de recouvrement entre elles, ou entre certaines d'entre elles, comme détaillé ci-après en relation avec les Figs. 7A et 7B.

La **Fig. 7A** illustre schématiquement un premier exemple de chevauchement de régions d'intérêt ROI de plusieurs terminaux sans-fil de réalité virtuelle, tels que les terminaux HMD1 141, HMD2 142 et HMD3 143.

Dans la Fig. 7A, on retrouve l'image immersive 600, dépliée de manière à apparaître dans un plan. On suppose que, dans la Fig. 7A, trois utilisateurs utilisent respectivement les terminaux HMD1 141, HMD2 142 et HMD3 143, et visualisent différentes régions d'intérêt ROI dans l'image immersive 600. Une région d'intérêt ROI 701 est définie pour le terminal HMD1 141, une région d'intérêt ROI 702 est définie pour le terminal HMD2 142, et une région d'intérêt ROI 703 est définie pour le terminal HMD3 143. Ces trois régions d'intérêt ROI 701, 702 et 703 ont en commun une zone de recouvrement 704. Ainsi, dans la mesure où les trois terminaux HMD1 141, HMD2 142 et HMD3 143 se sont déclarés compatibles avec les transmissions en mode point-à-multipoint (voir Fig. 3A), les données correspondant à cette zone de recouvrement 704 peuvent être transmises en mode point-à-multipoint, alors que les données correspondant au reste des trois régions d'intérêt ROI 701, 702 et 703 sont à transmettre en mode point-à-point.

La **Fig. 7B** illustre schématiquement un second exemple de chevauchement de régions d'intérêt de plusieurs terminaux sans-fil de réalité virtuelle, tels que les terminaux HMD1 141, HMD2 142 et HMD3 143. On y retrouve les trois régions d'intérêt ROI 701, 702 et 703 dans l'image immersive 600, avec des positions différentes de celles de la Fig. 7A. La zone de recouvrement des trois régions d'intérêt ROI 701, 702 et 703 est alors beaucoup plus petite que sur la Fig. 7A, alors que les régions d'intérêt ROI 702 et 703 ont une zone de recouvrement 705 bien plus grande. Il peut alors être intéressant de transmettre en mode point-à-multipoint les données correspondant à cette zone de recouvrement 705, et de transmettre en mode point-à-point les données correspondant au reste des régions d'intérêt ROI 702 et 703, ainsi que l'intégralité des données correspondant à la région d'intérêt ROI 701.

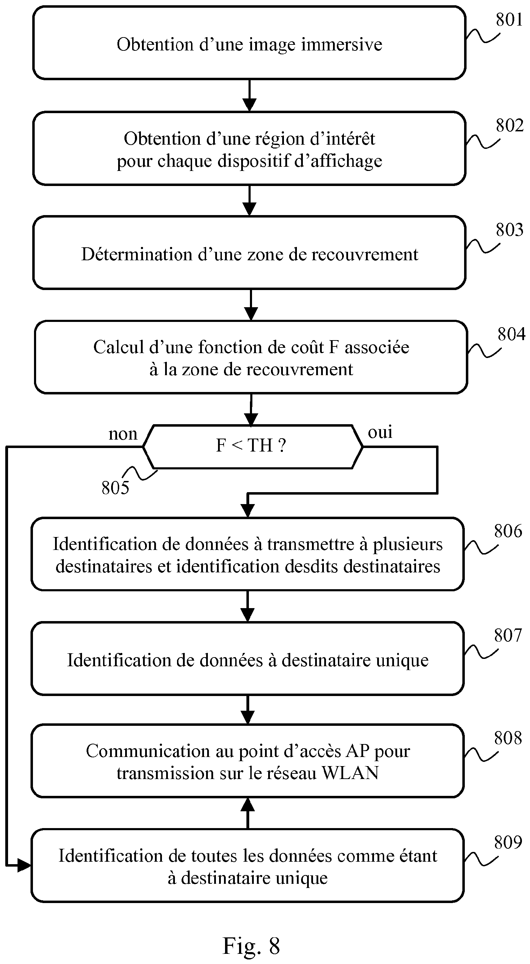

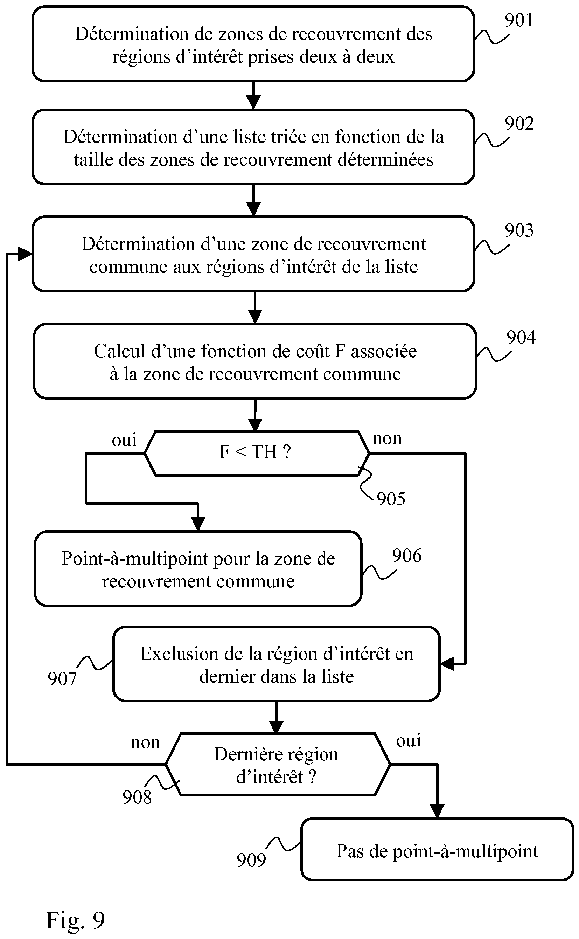

Les modes de transmission par le point d'accès AP 111 de données fournies par la passerelle résidentielle RGW 110 à destination des terminaux HMD1 141, HMD2 142 et HMD3 143 sont ainsi adaptés en fonction d'un recouvrement entre les régions d'intérêt ROI 701, 702 et 703. Cet aspect est détaillé ci-après en relation avec les Figs. 8 et 9.

La **Fig. 8** illustre schématiquement un algorithme de répartition de données par un dispositif fournisseur de contenu de réalité virtuelle, tel que la passerelle résidentielle RGW 110. Une pluralité de terminaux sans-fil du réseau local sans-fil WLAN 130 permettent d'immerger autant d'utilisateurs simultanément dans le contexte de réalité virtuelle correspondant à l'image immersive 600. L'algorithme de la Fig. 8 est exécuté vis-à-vis des terminaux sans-fil ayant déclaré être compatibles, en tant que récepteurs, avec des transmissions en mode point-à-multipoint. Pour les terminaux sans-fil non compatibles, la passerelle résidentielle RGW 110 requiert auprès du point d'accès AP 111 une transmission en mode point-à-point des données correspondant à l'intégralité de leurs régions d'intérêt ROI. Il est considéré ici, de manière illustrative, que les terminaux HMD1 141, HMD2 142 et HMD3 143 sont tous compatibles, en tant que destinataires, avec des transmissions en mode point-à-multipoint.

Dans une étape 801, la passerelle résidentielle RGW 110 obtient l'image immersive 600. L'image immersive 600 est non encodée, ou si l'image immersive 600 est reçue du serveur SERV 100 de manière encodée, la passerelle résidentielle RGW 110 décode ladite image immersive 600.

Dans une étape 802, la passerelle résidentielle RGW 110 obtient une région d'intérêt ROI pour chaque terminal sans-fil utilisé dans le contexte de réalité virtuelle correspondant à l'image immersive 600.

Dans une étape 803, la passerelle résidentielle RGW 110 détermine une zone de recouvrement des régions d'intérêt ROI, telle que la zone de recouvrement 704 de la Fig. 7A.

Dans un mode de réalisation particulier, la passerelle résidentielle RGW 110 ajuste la zone de recouvrement des régions d'intérêt ROI en effectuant un alignement de ladite zone de recouvrement sur des frontières de macro-blocs dans l'image immersive 600, de sorte que la zone de recouvrement ajustée soit la plus petite portion de l'image immersive 600 alignée sur des frontières de macro-blocs qui englobe la zone de recouvrement réelle des régions d'intérêt ROI.

Dans une étape 804, la passerelle résidentielle RGW 110 calcule une fonction de coût F pour la zone de recouvrement déterminée à l'étape 803. La fonction de coût est représentative d'un gain effectif de bande passante, obtenu en utilisant le mode point-à-multipoint combiné au mode point-à-point, pour transmettre les données des régions d'intérêt ROI aux terminaux sans-fils concernés (en comparaison avec l'utilisation seule du mode point-à-point). Par exemple, la fonction de coût F est définie comme suit :

$$F = \frac{S_0}{\sum_{n=1}^{N} S_n}$$

où $S_0$ représente la taille, *e.g.* en quantité de bits, de la zone de recouvrement considérée, et $S_n$, $\forall 1 \leq n \leq N$, représente la taille, *e.g.* en quantité de bits, des régions d'intérêt ROI indexées par $n$.

Dans une étape 805, la passerelle résidentielle RGW 110 vérifie si la fonction de coût F est, ou pas, inférieure à un seuil prédéfini TH. Par exemple, en considérant la fonction de coût F exprimée ci-dessus, le seuil prédéfini TH est fixé à « 1 ». Lorsque la fonction de coût F est inférieure au seuil prédéfini TH, une étape 806 est effectuée ; sinon, une étape 809 est effectuée.

Dans l'étape 806, la passerelle résidentielle RGW 110 identifie les données de l'image immersive 600 à envoyer aux terminaux HMD1 141, HMD2 142 et HMD3 143 sous forme d'une transmission en mode point-à-multipoint (sans duplication de données). La passerelle résidentielle RGW 110 effectue un encodage desdites données, par exemple selon le format d'encodage H.265/MPEG-4 HEVC (ISO/IEC 23008-2 - MPEG-H Part 2, codage vidéo haute efficacité (« High Efficiency Video Coding » en anglais) / ITU-T H.265). Ainsi, les mécanismes de tuiles (« tile » en anglais) et/ou de tranches (« slice » en anglais) permettent aisément d'encoder les portions d'image concernées, de sorte que chacun des terminaux HMD1 141, HMD2 142 et HMD3 143 puissent décoder, de manière autonome, les données qui leur sont transmises (sans avoir connaissance du reste de l'image immersive 600). La passerelle résidentielle RGW 110 identifie les destinataires desdites données, e.g. retrouve l'identifiant de groupe associé aux terminaux HMD1 141, HMD2 142 et HMD3, de manière à pouvoir ultérieurement en informer le point d'accès AP 111.

Dans une étape 807, la passerelle résidentielle RGW 110 identifie les données de l'image immersive 600 à envoyer indépendamment aux terminaux HMD1 141, HMD2 142 et HMD3 143, c'est-à-dire sous forme d'une transmission en mode point-à-point. Préférentiellement, la passerelle résidentielle RGW 110 ajuste chaque région d'intérêt ROI en effectuant un alignement de ladite région d'intérêt ROI sur des frontières de macro-blocs dans l'image immersive 600, de sorte que ladite région d'intérêt ROI ajustée soit la plus petite portion de l'image immersive 600 alignée sur des frontières de macro-blocs qui englobe la région d'intérêt ROI réelle. Les données correspondant à la zone de recouvrement sont exclues (puisque traitées à l'étape 806). La passerelle résidentielle RGW 110 effectue un encodage desdites données, par exemple selon le format d'encodage H.265/MPEG-4 HEVC. La passerelle résidentielle RGW 110 identifie les destinataires respectifs desdites données, e.g. retrouve les identifiants d'association AID attribués aux terminaux HMD1 141, HMD2 142 et HMD3, de manière à pouvoir ultérieurement en informer le point d'accès AP 111.

Dans une étape 808, la passerelle résidentielle RGW 110 communique au point d'accès AP 111 les données à transmettre aux terminaux HMD1 141, HMD2 142 et HMD3 143. Lorsqu'une partie des données doit être transmise en mode point-à-multipoint, la passerelle résidentielle RGW 110 indique au point d'accès AP 111 quels destinataires, ou quel groupe de destinataires, sont concernés. Pour les données qui doivent être transmises en mode point-à-point, la passerelle résidentielle RGW 110 indique au point d'accès AP 111 quel destinataire est concerné. Il est alors mis fin à l'algorithme de la Fig. 8, et le point d'accès AP 111 exécute l'algorithme de la Fig. 4.

Dans l'étape 809, la passerelle résidentielle RGW 110 identifie les données de l'image immersive 600 à envoyer indépendamment aux terminaux HMD1 141, HMD2 142 et HMD3 143, c'est-à-dire sous forme d'une transmission en mode point-à-point. Préférentiellement, la passerelle résidentielle RGW 110 ajuste chaque région d'intérêt ROI en effectuant un alignement de ladite région d'intérêt ROI sur des frontières de macro-blocs dans l'image immersive 600, de sorte que ladite région d'intérêt ROI ajustée soit la plus petite portion de l'image immersive 600 alignée sur des frontières de macro-blocs qui englobe la région d'intérêt ROI réelle. La passerelle résidentielle RGW 110 effectue un encodage desdites données, par exemple selon le format d'encodage H.265/MPEG-4 HEVC. La passerelle résidentielle RGW 110 identifie les destinataires respectifs desdites données, e.g. retrouve les identifiants d'association AID attribués aux terminaux HMD1 141, HMD2 142 et HMD3, de manière à pouvoir ultérieurement en informer le point d'accès AP 111. L'étape 808 est ensuite effectuée.

Considérons un premier ensemble de terminaux sans-fil qui présentent des régions d'intérêt ROI qui se chevauchent et définissent ainsi une première zone de recouvrement. Considérons un second ensemble de terminaux sans-fil qui présentent des régions d'intérêt ROI qui se chevauchent entre elles mais qui ne se chevauchent pas avec les régions d'intérêt ROI du premier ensemble. Dans ce cas, la détermination de la zone de recouvrement et le calcul de la fonction de coût sont préférentiellement effectués indépendamment pour chaque ensemble de terminaux sans-fil.

Considérons un premier ensemble de terminaux sans-fil qui présentent des régions d'intérêt ROI qui se chevauchent et définissent ainsi une zone de recouvrement. Considérons un second ensemble de terminaux sans-fil qui présentent des régions d'intérêt ROI qui ne se chevauchent pas entre elles et qui ne se chevauchent pas non plus avec les régions d'intérêt ROI du premier ensemble. Dans ce cas, la détermination de la zone de recouvrement et le calcul de la fonction de coût sont préférentiellement effectués uniquement pour le premier ensemble de terminaux sans-fil, et les données de la région d'intérêt ROI de chaque terminal sans-fil du second ensemble sont transmises en mode point-à-point.

Comme indiqué en relation avec la Fig. 7B, lorsque la zone de recouvrement des régions d'intérêt ROI considérées est trop petite pour permettre un gain en bande passante significatif, il est possible d'exclure une ou plusieurs régions d'intérêt ROI de la détermination de la zone de recouvrement pouvant bénéficier d'une transmission en mode point-à-multipoint. Cet aspect est détaillé ci-dessous en relation avec la Fig. 9.

La **Fig. 9** illustre schématiquement un algorithme de détermination de zone de recouvrement appropriée pour une transmission point-à-multipoint, dans un mode de réalisation particulier. L'algorithme de la Fig. 9 vient en substitution des étapes 803 à 805 précédemment décrites.

Dans une étape 901, la passerelle résidentielle RGW 110 prend les régions d'intérêt ROI deux à deux et en détermine une éventuelle zone de recouvrement.

Dans une étape 902, la passerelle résidentielle RGW 110 détermine une liste triée des régions d'intérêt ROI en fonction des zones de recouvrement déterminées à l'étape 901. Les deux premiers éléments de la liste présentent la plus grande zone de recouvrement parmi les zones de recouvrement déterminées à l'étape 901. Ensuite les régions d'intérêt ROI sont triées en ajoutant successivement à la liste la région d'intérêt ROI qui présente la plus grande zone de recouvrement avec le dernier élément de la liste.

Dans une étape 903, la passerelle résidentielle RGW 110 détermine une éventuelle zone de recouvrement commune à toutes les régions d'intérêt ROI présentes dans la liste.

Dans une étape 904, la passerelle résidentielle RGW 110 calcule la fonction de coût pour la zone de recouvrement commune déterminée à l'étape 903. Si aucune zone de recouvrement commune n'a pu être déterminée à l'étape 903, la fonction de coût est considérée supérieure au seuil TH.

Dans une étape 905, la passerelle résidentielle RGW 110 vérifie si la fonction de coût F est, ou pas, inférieure au seuil prédéfini TH. Lorsque la fonction de coût F est inférieure au seuil prédéfini TH, une étape 906 est effectuée ; sinon, une étape 907 est effectuée.

Dans l'étape 906, la passerelle résidentielle RGW 110 décide qu'une transmission en mode point-à-multipoint est possible pour les données de la zone de recouvrement commune déterminée à l'étape 903, les autres données des régions d'intérêt ROI de la liste devant alors être transmises en mode point-à-point, tout comme les données de chaque région d'intérêt ROI qui a été exclue de la liste.

Dans l'étape 907, la passerelle résidentielle RGW 110 exclut de la liste la région d'intérêt ROI listée en dernière position.

Dans une étape 908, la passerelle résidentielle RGW 110 vérifie si la liste ne contient plus qu'une seule région d'intérêt ROI. Si tel est le cas, une étape 909 est effectuée ; sinon, l'étape 903 est répétée avec la liste telle que modifiée à l'étape 907.

Dans l'étape 909, la passerelle résidentielle RGW 110 décide qu'aucune transmission en mode point-à-multipoint n'est souhaitable. Toutes les données des régions d'intérêt ROI sont alors transmises en mode point-à-point.

## Revendications

1. Procédé de transmission de trame par un point d'accès (111) d'un réseau local sans-fil (130), le point d'accès (111) ayant effectué une phase d'association avec une pluralité de terminaux sans-fil (141, 142, 143), **caractérisé en ce que** le point d'accès (111) reçoit (301, 303), pendant la phase d'association, de chaque terminal sans-fil (141, 142) compatible avec des transmissions en mode point-à-multipoint une information indiquant que ledit terminal sans-fil (141, 142) est compatible avec des transmissions en mode point-à-multipoint ;
et **en ce que**, pour transmettre (405) la trame, le point d'accès (111) effectue les étapes suivantes :

   - obtenir (401) des données à transmettre en mode point-à-multipoint à plusieurs destinataires parmi les terminaux sans-fil compatibles ;
   - obtenir (402) des données à transmettre en mode point-à-point à au moins un destinataire respectif parmi les terminaux sans-fil ;
   - construire (403) un entête de couche physique incluant :

      - dans un champ commun de signalisation (511), une identification de chaque ressource canal destinée à être utilisée pour effectuer la transmission de trame que ce soit pour les données à transmettre en mode point-à-point ou en mode point-à-multipoint ;
      - dans chaque champ d'une série de champs spécifiques de signalisation (512), une information représentative d'une association entre un identifiant de ressource canal utilisée et un unique identifiant de destinataire concerné ou de groupe de destinataires concernés, de telle sorte que chaque destinataire (141, 142, 143) puisse déterminer chaque ressource canal à écouter pour recevoir les données qui lui sont adressées que ce soit en mode point-à-point ou en mode point-à-multipoint.

2. Procédé selon la revendication 1, **caractérisé en ce que**, pour effectuer une transmission en mode point-à-multipoint vers plusieurs destinataires, le point d'accès (111) effectue au préalable les étapes suivantes :

   - recevoir un ordre de création de groupe à partir d'une liste de destinataires ;
- transmettre (311, 313) un identifiant de groupe à chaque destinataire dudit groupe ;

et **en ce que** la série de champs spécifiques de signalisation (512) est telle que, pour indiquer une transmission en mode point-à-multipoint sur une ressource canal, un unique champ spécifique est défini pour ladite ressource canal dans lequel est indiqué l'identifiant de groupe.

3. Procédé selon la revendication 1, **caractérisé en ce que** la série de champs spécifiques de signalisation (512) est telle que, pour indiquer une transmission en mode point-à-multipoint sur une ressource canal, autant de champs spécifiques de signalisation pour ladite ressource canal sont inclus dans l'entête de couche physique que de destinataires à ladite transmission en mode point-à-multipoint.

4. Procédé selon l'une quelconque des revendications 1 à 3, **caractérisé en ce que** l'entête de couche physique indique que la trame contient des données transmises en mode point-à-multipoint.

5. Procédé selon la revendication 4, **caractérisé en ce que** chaque champ spécifique de signalisation (512) indique s'il existe au moins un autre champ spécifique (512) de signalisation, ultérieur dans l'entête de couche physique, qui est associé au même destinataire ou à au moins un destinataire du même groupe de destinataires.

6. Procédé selon l'une quelconque des revendications 1 à 5, **caractérisé en ce que** le point d'accès (111) coopère avec un dispositif fournisseur de données de réalité virtuelle (110) disposant d'une image immersive (600) dans laquelle une pluralité d'utilisateurs peut s'immerger par le biais de terminaux sans-fil (141, 142, 143) affichant des régions d'intérêt (701, 702, 703) respectives de ladite image immersive (600), et **en ce que** le dispositif fournisseur de données de réalité virtuelle (110) demande au point d'accès (111) de transmettre dans la trame des données correspondant à une zone de recouvrement (704, 705) desdites régions d'intérêt (701, 702, 703) en mode point-à-multipoint et le reste des données desdites régions d'intérêt (701, 702, 703) en mode point-à-point.

7. Procédé selon la revendication 6, **caractérisé en ce que** le dispositif fournisseur de données de réalité virtuelle (110) effectue les étapes suivantes :

   - calculer (804) une fonction de coût relative à la zone de recouvrement ;
   - comparer (805) la fonction de coût calculée avec un seuil prédéfini ;

   - demander au point d'accès de transmettre les données relatives à la zone de recouvrement en mode point-à-multipoint lorsque la fonction de coût calculée est inférieure au seuil prédéfini ; et
   - demander au point d'accès de transmettre les données relatives à la zone de recouvrement en mode point-à-point lorsque la fonction de coût calculée est inférieure au seuil prédéfini.

8. Procédé selon la revendication 7, **caractérisé en ce que** la fonction de coût est exprimée comme suit :

$$F = \frac{S_0}{\sum_{n=1}^{N} S_n}$$

   où $N$ représente la quantité de régions d'intérêt considérées (701, 702, 703), $S_0$ représente la taille de la zone de recouvrement (704, 705), et $S_n, \forall 1 \le n \le N,$ représente la taille des régions d'intérêt (701, 702, 703) indexées par $n$.

9. Procédé selon l'une quelconque des revendications 6 à 8, **caractérisé en ce que** le dispositif fournisseur de données de réalité virtuelle (110) effectue un alignement de la zone de recouvrement (704, 705) sur des frontières de macro-blocs.

10. Procédé selon l'une quelconque des revendications 6 à 9, **caractérisé en ce que**, lorsqu'un premier ensemble de terminaux sans-fil présente des régions d'intérêt qui se chevauchent et définissent une première zone de recouvrement et un second ensemble de terminaux sans-fil présente des régions d'intérêt qui se chevauchent entre elles mais qui ne se chevauchent pas avec les régions d'intérêt du premier ensemble, le dispositif fournisseur de données de réalité virtuelle (110) détermine la zone de recouvrement et calcule la fonction de coût indépendamment pour chaque ensemble de terminaux sans-fil.

11. Procédé selon l'une quelconque des revendications 6 à 9, **caractérisé en ce que**, lorsqu'un premier ensemble de terminaux sans-fil présente des régions d'intérêt qui se chevauchent et définissent une zone de recouvrement et un second ensemble de terminaux sans-fil présente des régions d'intérêt qui ne se chevauchent pas entre elles et qui ne se chevauchent pas non plus avec les régions d'intérêt du premier ensemble, le dispositif fournisseur de données de réalité virtuelle (110) détermine la zone de recouvrement et calcule la fonction de coût uniquement pour le premier ensemble de terminaux sans-fil, et demande au point d'accès (111) de transmettre en mode point-à-point les données de la région d'intérêt de chaque terminal sans-fil du second ensemble.

12. Procédé selon l'une quelconque des revendications 6 à 11, **caractérisé en ce que** le dispositif fournisseur de données de réalité virtuelle (110) effectue les étapes suivantes :

- prendre (901) les régions d'intérêt deux à deux et en déterminer une éventuelle zone de recouvrement ;
- déterminer (902) une liste triée des régions d'intérêt en fonction des zones de recouvrement déterminées, de sorte que les deux premiers éléments de la liste présentent la plus grande zone de recouvrement et les régions d'intérêt sont ensuite triées en ajoutant successivement à la liste la région d'intérêt qui présente la plus grande zone de recouvrement avec le dernier élément de la liste ;
- effectuer au moins une itération des étapes suivantes :

- déterminer (903) une éventuelle zone de recouvrement commune à toutes les régions d'intérêt présentes dans la liste ;
- calculer (904) une fonction de coût pour la zone de recouvrement commune déterminée, et si aucune zone de recouvrement commune n'a pu être déterminée, considérer la fonction de coût comme supérieure à un seuil prédéfini ;
- décider (906) qu'une transmission en mode point-à-multipoint est possible pour les données de la zone de recouvrement commune lorsque la fonction de coût est inférieure au seuil prédéfini ;
- exclure (907) de la liste la région d'intérêt listée en dernière position lorsque la fonction de coût est supérieure ou égale au seuil prédéfini et effectuer une nouvelle itération.

**13.** Procédé selon l'une des revendications 6 à 12, **caractérisé en ce que** le dispositif fournisseur de données de réalité virtuelle (110) est une passerelle résidentielle.

**14.** Procédé selon l'une des revendications 1 à 13, **caractérisé en ce que** la trame est transmise par le point d'accès (111) selon une technique de type OFDMA.

**15.** Procédé selon l'une des revendications 1 à 14, **caractérisé en ce que** le réseau local sans-fil (130) est de type Wi-Fi.

**16.** Produit programme d'ordinateur, **caractérisé en ce qu'**il comprend des instructions pour implémenter, par un processeur (200), le procédé selon l'une quelconque des revendications 1 à 15, lorsque ledit programme est exécuté par ledit processeur (200).

**17.** Support de stockage d'informations, **caractérisé en ce qu'**il stocke un programme d'ordinateur comprenant des instructions pour implémenter, par un processeur (200), le procédé selon l'une quelconque des revendications 1 à 15, lorsque ledit programme est lu et exécuté par ledit processeur (200).

**18.** Point d'accès (111) d'un réseau local sans-fil (130), le point d'accès (111) étant adapté pour effectuer une transmission de trame dans ledit réseau local sans-fil (130), le point d'accès (111) ayant effectué une phase d'association avec une pluralité de terminaux sans-fil (141, 142, 143),

**caractérisé en ce que** le point d'accès (111) comporte des moyens pour recevoir (301, 303), pendant la phase d'association, de chaque terminal sans-fil (141, 142) compatible avec des transmissions en mode point-à-multipoint une information indiquant que ledit terminal sans-fil (141, 142) est compatible avec des transmissions en mode point-à-multipoint ;
et **en ce que**, pour transmettre (405) la trame, le point d'accès (111) comporte :

- des moyens pour obtenir (401) des données à transmettre en mode point-à-multipoint à plusieurs destinataires parmi les terminaux sans-fil compatibles ;
- des moyens pour obtenir (402) des données à transmettre en mode point-à-point à au moins un destinataire respectif parmi les terminaux sans-fil ;
- des moyens pour construire (403) un entête de couche physique incluant :

- dans un champ commun de signalisation (511), une identification de chaque ressource canal destinée à être utilisée pour effectuer la transmission de trame que ce soit pour les données à transmettre en mode point-à-point ou en mode point-à-multipoint ;
- dans chaque champ d'une série de champs spécifiques de signalisation (512), une information représentative d'une association entre un identifiant de ressource canal utilisée et un unique identifiant de destinataire concerné ou de groupe de destinataires concernés, de telle sorte que chaque destinataire (141, 142, 143) puisse déterminer chaque ressource canal à écouter pour recevoir les données qui lui sont adressées que ce soit en mode point-à-point ou en mode point-à-multipoint.

**Patentansprüche**

1. Verfahren zur Rahmenübertragung durch einen Zugangspunkt (111) eines drahtlosen lokalen Netzes (130), wobei der Zugangspunkt (111) eine Assoziationsphase mit einer Vielzahl drahtloser Endgeräte (141, 142, 143) ausgeführt hat, **dadurch gekennzeichnet, dass** der Zugangspunkt (111) während der Assoziationsphase von jedem drahtlosen Endgerät (141, 142), das mit Übertragungen im Punkt-zu-Mehrpunkt-Modus kompatibel ist, eine Information empfängt (301, 303), die anzeigt, dass das drahtlose Endgerät (141, 142) mit Übertragungen im Punkt-zu-Mehrpunkt-Modus kompatibel ist; und dass der Zugangspunkt (111) die folgenden Schritte zur Übertragung (405) des Rahmens ausführt:

   - Erhalt (401) von an mehrere Empfänger unter den kompatiblen drahtlosen Endgeräten im Punkt-zu-Mehrpunkt-Modus zu übertragenden Daten;
   - Erhalt (402) von an mindestens einen Empfänger unter den drahtlosen Endgeräten im Punkt-zu-Punkt-Modus zu übertragenden Daten;
   - Aufbau (403) einer Kopfzeile einer physikalischen Schicht, die umfasst:

     - in einem gemeinsamen Signalisierungsfeld (511) eine Identifizierung jeder Kanalressource, die dazu bestimmt ist, zur Ausführung der Rahmenübertragung entweder der im Punkt-zu-Punkt-Modus oder der im Punkt-zu-Mehrpunkt-Modus zu übertragenden Daten verwendet zu werden;
     - in jedem Feld einer Reihe spezieller Signalisierungsfelder (512) eine für eine Assoziation zwischen einer Kennung einer verwendeten Kanalressource und einer Einzelkennung eines betroffenen Empfängers oder einer betroffenen Empfängergruppe repräsentative Information, so dass jeder Empfänger (141, 142, 143) jede abzuhörende Kanalressource bestimmen kann, um die Daten zu empfangen, die entweder im Punkt-zu-Punkt-Modus oder im Punkt-zu-Mehrpunkt-Modus an ihn geschickt werden.

2. Verfahren nach Anspruch 1, **dadurch gekennzeichnet, dass** zur Ausführung einer Übertragung im Punkt-zu-Mehrpunkt-Modus an mehrere Empfänger der Zugangspunkt (111) vorab die folgenden Schritte ausführt:

   - Empfang eines Gruppenerzeugungsbefehls ausgehend von einer Liste von Empfängern;
   - Übertragung (311, 313) einer Gruppenkennung an jeden Empfänger der Gruppe; und dass die Reihe spezieller Signalisierungsfelder (512) so ist, dass zur Anzeige einer Übertragung im Punkt-zu-Mehrpunkt-Modus auf einer Kanalressource ein einziges spezielles Feld für die Kanalressource definiert wird, in dem die Gruppenkennung angezeigt wird.

3. Verfahren nach Anspruch 1, **dadurch gekennzeichnet, dass** die Reihe spezieller Signalisierungsfelder (512) so ist, dass zur Anzeige einer Übertragung im Punkt-zu-Mehrpunkt-Modus auf einer Kanalressource ebenso viele spezielle Signalisierungsfelder für die Kanalressource in der Kopfzeile der physikalischen Schicht wie Empfänger der Übertragung im Punkt-zu-Mehrpunkt-Modus enthalten sind.

4. Verfahren nach einem der Ansprüche 1 bis 3, **dadurch gekennzeichnet, dass** die Kopfzeile einer physikalischen Schicht anzeigt, dass der Rahmen im Punkt-zu-Mehrpunkt-Modus übertragene Daten enthält.

5. Verfahren nach Anspruch 4, **dadurch gekennzeichnet, dass** jedes spezielle Signalisierungsfeld (512) anzeigt, ob es mindestens ein weiteres spezielles Signalisierungsfeld (512) später in der Kopfzeile einer physikalischen Schicht gibt, das dem gleichen Empfänger oder mindestens einem Empfänger der gleichen Gruppe von Empfängern assoziiert ist.

6. Verfahren nach einem der Ansprüche 1 bis 5, **dadurch gekennzeichnet, dass** der Zugangspunkt (111) mit einer Liefervorrichtung von Daten virtueller Realität (110) zusammenwirkt, die über ein immersives Bild (600) verfügt, in das eine Vielzahl von Benutzern mittels drahtloser Endgeräte (141, 142, 143) immergieren können, die interessierende Bereiche (701, 702, 703) des immersiven Bilds (600) anzeigen, und dass die Liefervorrichtung von Daten virtueller Realität (110) vom Zugangspunkt (111) fordert, in dem Rahmen Daten entsprechend einer Überlappungszone (704, 705) der interessierenden Bereiche (701, 702, 703) im Punkt-zu-Mehrpunkt-Modus und den Rest der Daten der interessierenden Bereiche (701, 702, 703) im Punkt-zu-Punkt-Modus zu übertragen.

7. Verfahren nach Anspruch 6, **dadurch gekennzeichnet, dass** die Liefervorrichtung von Daten virtueller Realität (110) die folgenden Schritte ausführt:

   - Berechnung (804) einer Kostenfunktion bezüglich der Überlappungszone;
   - Vergleich (805) der berechneten Kostenfunktion mit einer vordefinierten Schwelle;
   - Forderung an den Zugangspunkt, die Daten bezüglich der Überlappungszone im Punkt-zu-Mehrpunkt-Modus zu übertragen, wenn die berechnete Kostenfunktion niedriger als die vordefinierte Schwelle ist; und

- Forderung an den Zugangspunkt, die Daten bezüglich der Überlappungszone im Punkt-zu-Punkt-Modus zu übertragen, wenn die berechnete Kostenfunktion niedriger als die vordefinierte Schwelle ist.

8. Verfahren nach Anspruch 7, **dadurch gekennzeichnet, dass** die Kostenfunktion folgendermaßen ausgedrückt wird:

$$F = \frac{S_0}{\sum_{n=1}^{N} S_n}$$

wobei $N$ die Menge an betrachteten interessierenden Bereichen (701, 702, 703) darstellt, $S_0$ die Größe der Überlappungszone (704, 705) darstellt und $S_n$, $\forall 1 \leq n \leq N$ die Größe der interessierenden Bereiche (701, 702, 703) indexiert durch $n$ darstellt.

9. Verfahren nach einem der Ansprüche 6 bis 8, **dadurch gekennzeichnet, dass** die Liefervorrichtung von Daten virtueller Realität (110) eine Ausrichtung der Überlappungszone (704, 705) auf Grenzen von Makroblöcken ausführt.

10. Verfahren nach einem der Ansprüche 6 bis 9, **dadurch gekennzeichnet, dass**, wenn eine erste Einheit von drahtlosen Endgeräten interessierende Bereiche aufweist, die sich überlappen und eine erste Überlappungszone definieren, und eine zweite Einheit von drahtlosen Endgeräten interessierende Bereiche aufweist, die sich gegenseitig überlappen aber sich nicht mit den interessierenden Bereichen der ersten Einheit überlappen, die Liefervorrichtung von Daten virtueller Realität (110) die Überlappungszone bestimmt und die Kostenfunktion unabhängig für jede Einheit von drahtlosen Endgeräten berechnet.

11. Verfahren nach einem der Ansprüche 6 bis 9, **dadurch gekennzeichnet, dass**, wenn eine erste Einheit von drahtlosen Endgeräten interessierende Bereiche aufweist, die sich überlappen und eine Überlappungszone definieren, und eine zweite Einheit von drahtlosen Endgeräten interessierende Bereiche aufweist, die sich nicht gegenseitig überlappen und die sich auch nicht mit den interessierenden Bereichen der ersten Einheit überlappen, die Liefervorrichtung von Daten virtueller Realität (110) die Überlappungszone bestimmt und die Kostenfunktion nur für die erste Einheit von drahtlosen Endgeräten berechnet, und vom Zugangspunkt (111) fordert, die Daten des interessierenden Bereichs jedes drahtlosen Endgeräts der zweiten Einheit im Punkt-zu-Punkt-Modus zu übertragen.

12. Verfahren nach einem der Ansprüche 6 bis 11, **dadurch gekennzeichnet, dass** die Liefervorrichtung von Daten virtueller Realität (110) die folgenden Schritte ausführt:

- paarweises Nehmen (901) der interessierenden Bereiche und Bestimmen einer möglichen Überlappungszone;
- Bestimmen (902) einer sortierten Liste der interessierenden Bereiche abhängig von den bestimmten Überlappungszonen, so dass die zwei ersten Elemente der Liste die größte Überlappungszone aufweisen und die interessierenden Bereiche anschließend sortiert werden, indem nacheinander der interessierende Bereich zu der Liste hinzugefügt wird, der die größte Überlappungszone mit dem letzten Element der Liste aufweist;
- Ausführen mindestens einer Iteration der folgenden Schritte:

- Bestimmen (903) einer möglichen Überlappungszone, die allen in der Liste vorhandenen interessierenden Bereichen gemeinsam ist;
- Berechnen (904) einer Kostenfunktion für die bestimmte gemeinsame Überlappungszone, und wenn keine gemeinsame Überlappungszone bestimmt werden konnte, Betrachten der Kostenfunktion als höher als eine vordefinierte Schwelle;
- Entscheiden (906), dass eine Übertragung im Punkt-zu-Mehrpunkt-Modus für die Daten der gemeinsamen Überlappungszone möglich ist, wenn die Kostenfunktion niedriger als die vordefinierte Schwelle ist;
- Ausschließen (907) aus der Liste des an letzter Stelle aufgelisteten interessierenden Bereichs, wenn die Kostenfunktion höher als die oder gleich der vordefinierten Schwelle ist, und Ausführen einer neuen Iteration.

13. Verfahren nach einem der Ansprüche 6 bis 12, **dadurch gekennzeichnet, dass** die Liefervorrichtung von Daten virtueller Realität (110) ein Residential-Gateway ist.

14. Verfahren nach einem der Ansprüche 1 bis 13, **dadurch gekennzeichnet, dass** der Rahmen vom Zugangspunkt (111) gemäß einer Technik des Typs OFDMA übertragen wird.

15. Verfahren nach einem der Ansprüche 1 bis 14, **dadurch gekennzeichnet, dass** das drahtlose lokale Netz (130) vom Typ W-LAN ist.

16. Computerprogrammprodukt, **dadurch gekennzeichnet, dass** es Anweisungen enthält, um das Verfahren nach einem der Ansprüche 1 bis 15 durch einen Prozessor (200) zu implementieren, wenn das Programm vom Prozessor (200) ausgeführt wird.

17. Datenspeicherträger, **dadurch gekennzeichnet, dass** er ein Computerprogramm speichert, das Anweisungen enthält, um das Verfahren nach einem der Ansprüche 1 bis 15 durch einen Prozessor (200) zu implementieren, wenn das Programm vom Prozessor (200) gelesen und ausgeführt wird.

18. Zugangspunkt (111) eines drahtlosen lokalen Netzes (130), wobei der Zugangspunkt (111) geeignet ist, eine Rahmenübertragung im drahtlosen lokalen Netz (130) auszuführen, wobei der Zugangspunkt (111) eine Assoziationsphase mit einer Vielzahl von drahtlosen Endgeräten (141, 142, 143) ausgeführt hat,

dadurch gekennzeichnet, dass der Zugangspunkt (111) Einrichtungen aufweist, um während der Assoziationsphase von jedem drahtlosen Endgerät (141, 142), das mit Übertragungen im Punkt-zu-Mehrpunkt-Modus kompatibel ist, eine Information zu empfangen (301, 303), die anzeigt, dass das drahtlose Endgerät (141, 142) mit Übertragungen im Punkt-zu-Mehrpunkt-Modus kompatibel ist; und dass der Zugangspunkt (111) zur Übertragung (405) des Rahmens aufweist:

- Einrichtungen für den Erhalt (401) von an mehrere Empfänger unter den kompatiblen drahtlosen Endgeräten im Punkt-zu-Mehrpunkt-Modus zu übertragenden Daten; - Einrichtungen für den Erhalt (402) von an mindestens einen Empfänger unter den drahtlosen Endgeräten im Punkt-zu-Punkt-Modus zu übertragenden Daten; - Einrichtungen für den Aufbau (403) einer Kopfzeile einer physikalischen Schicht, die umfasst:

- in einem gemeinsamen Signalisierungsfeld (511) eine Identifizierung jeder Kanalressource, die dazu bestimmt ist, zur Ausführung der Rahmenübertragung der entweder im Punkt-zu-Punkt-Modus oder im Punkt-zu-Mehrpunkt-Modus zu übertragenden Daten verwendet zu werden; - in jedem Feld einer Reihe spezieller Signalisierungsfelder (512) eine für eine Assoziation zwischen einer Kennung einer verwendeten Kanalressource und einer Einzelkennung eines betroffenen Empfängers oder einer betroffenen Empfängergruppe repräsentative Information, so dass jeder Empfänger (141, 142, 143) jede abzuhörende Kanalressource bestimmen kann, um die Daten zu empfangen, die entweder im Punkt-zu-Punkt-Modus oder im Punkt-zu-Mehrpunkt-Modus an ihn adressiert an ihn werden.

**Claims**

1. Method for transmitting a frame by an access point (111) of a wireless local area network (130), the access point (111) having performed a phase of association with a plurality of wireless terminals (141, 142, 143), **characterised in that** the access point (111) receives (301, 303), during the phase of association, from each wireless terminal (141, 142) compatible with transmissions in multicast mode, information indicating that said wireless terminal (141, 142) is compatible with transmissions in multicast mode; and **in that**, for transmitting (405) the frame, the access point (111) performs the following steps:

- obtaining (401) data to be transmitted in multicast mode to a plurality of destinations from among the compatible wireless terminals; - obtaining (402) data to be transmitted in unicast mode to at least one respective destination from among the wireless terminals; - building (403) a physical-layer header including:

- in a common signalling field (511), an identification of each channel resource intended to be used for performing the frame transmission whether this be for the data to be transmitted in unicast mode or in multicast mode; - in each field of a series of specific signalling fields (512), information representing an association between a channel resource identifier used and a unique identifier of a concerned destination or of a group of concerned destinations, so that each destination (141, 142, 143) can determine each channel resource to listen to for receiving the data that are addressed thereto, whether it be in unicast mode or in multicast mode.

2. Method according to claim 1, **characterised in that**, for performing a transmission in multicast mode to a plurality of destinations, the access point (111) performs beforehand the following steps:

- receiving an instruction to create a group from a list of destinations;
- transmitting (311, 313) a group identifier to each destination of said group; and **in that** the series of specific signalling fields (512) is such that, for indicating a transmission in multicast mode on a channel resource, a single specific field is defined for said channel resource in which the group identifier is indicated.

3. Method according to claim 1, **characterised in that** the series of specific signalling fields (512) is such that, for indicating a transmission in multicast mode on a channel resource, as many specific signalling fields for said channel resource are included in the physical-layer header as there are destinations of said transmission in multicast mode.

4. Method according to any one of claims 1 to 3, **characterised in that** the physical-layer header indicates that the frame contains data transmitted in multicast mode.

5. Method according to claim 4, **characterised in that** each specific signalling field (512) indicates that there exists at least one other specific signalling field (512), subsequent in the physical-layer header, that is associated with the same destination or with at least one destination in the same group of destinations

6. Method according to any one of claims 1 to 5, **characterised in that** the access point (111) cooperates with a device (110) supplying virtual-reality data having an immersive image (600) in which a plurality of users can immerse themselves by means of wireless terminals (141, 142, 143) displaying respective regions of interest (701, 702, 703) of said immersive image (600), and **in that** the device (110) supplying virtual-reality data requests the access point (111) to transmit in the frame data corresponding to an overlap zone (704, 705) of said regions of interest (701, 702, 703) in multicast mode and the rest of the data of said regions of interest (701, 702, 703) in unicast mode.

7. Method according to claim 6, **characterised in that** the device (110) supplying virtual-reality data performs the following steps:

     - computing (804) a cost function relating to the overlap zone;
     - comparing (805) the computed cost function with a predefined threshold;
     - requesting the access point to transmit the data relating to the overlap zone in multicast mode when the computed cost function is below the predefined threshold; and

     - requesting the access point to transmit the data relating to the overlap zone in unicast mode when the computed cost function is below the predefined threshold.

8. Method according to claim 7, **characterised in that** the cost function is expressed as follows:

$$F = \frac{S_0}{\sum_{n=1}^{N} S_n}$$

where $N$ represents the quantity of regions of interest in question (701, 702, 703), $S_0$ represents the size of the overlap zone (704, 705), and $S_n$, $\forall 1 \le n \le N$, represents the size of the regions of interest (701, 702, 703) indexed by $n$.

9. Method according to any one of claims 6 to 8, **characterised in that** the device (110) supplying virtual-reality data makes an alignment of the overlap zone (704, 705) on macroblock boundaries.

10. Method according to any one of claims 6 to 9, **characterised in that**, when a first set of wireless terminals has regions of interest that overlap and define a first overlap zone and a second set of wireless terminals has regions of interest that overlap with each other but which do not overlap with the regions of interest in the first set, the device (110) supplying virtual-reality data determines the overlap zone and computes the cost function independently for each set of wireless terminals.

11. Method according to any one of claims 6 to 9, **characterised in that**, when a first set of wireless terminals has regions of interest that overlap and define an overlap zone and a second set of wireless terminals has regions of interest that do not overlap with each other and which also do not overlap with the regions of interest of the first set, the device (110) supplying virtual-reality data determines the overlap zone and computes the cost function only for the first set of wireless terminals, and requests the access point (111) to transmit, in unicast mode, the data of the region of interest of each wireless terminal in the second set.

12. Method according to any one of claims 6 to 11, **characterised in that** the device (110) supplying virtual-reality data performs the following steps:

     - taking (901) the regions of interest two by two and determining any overlap zone thereof;
     - determining (902) a sorted list of the regions of interest according to the determined overlap zones, so that the first two items of the list have the largest overlap zone, and the regions of interest are next sorted by successively adding to the list the region of interest that has the largest overlap zone with the last item in the list;
- performing at least one iteration of the following steps:

- determining (903) any overlap zone common to all the regions of interest present in the list;
- computing (904) a cost function for the determined common overlap zone and, if no common overlap zone has been able to be determined, considering the cost function as being above a predefined threshold;
- deciding (906) that a transmission in multicast mode is possible for the data of the common overlap zone when the cost function is below the predefined threshold;
- excluding (907) from the list the region of interest present in the last position of the list when the cost function is above or equal to the predefined threshold and performing a new iteration.

**13.** Method according to one of claims 6 to 12, **characterised in that** the device (110) supplying virtual-reality data is a residential gateway.

**14.** Method according to one of claims 1 to 13, **characterised in that** the frame is transmitted by the access point (111) in accordance with an OFDMA technique.

**15.** Method according to one of claims 1 to 14, **characterised in that** the wireless local area network (130) is of the Wi-Fi type.

**16.** Computer program product, **characterised in that** it comprises instructions for implementing, by a processor (200), the method according to any one of claims 1 to 15, when said program is executed by said processor (200).

**17.** Information storage medium, **characterised in that** it stores a computer program comprising instructions for implementing, by a processor (200), the method according to any one of claims 1 to 15, when said program is read and executed by said processor (200).

**18.** Access point (111) of a wireless local area network (130), the access point (111) being adapted to perform a frame transmission in said wireless local area network (130), the access point (111) having performed a phase of association with a plurality of wireless terminals (141, 142, 143),

**characterised in that** the access point (111) comprises means for receiving (301, 303), during the phase of association, from each wireless terminal (141, 142) compatible with transmissions in multicast mode, information indicating that said wireless terminal (141, 142) is compatible with transmissions in multicast mode;
and **in that**, for transmitting (405) the frame, the access point (111) comprises:

- means for obtaining (401) data to be transmitted in multicast mode to a plurality of destinations from among the compatible wireless terminals;
- means for obtaining (402) data to be transmitted in unicast mode to at least one respective destination from among the wireless terminals;
- means for building (403) a physical-layer header including:

- in a common signalling field (511), an identification of each channel resource intended to be used for performing the frame transmission, whether this be for the data to be transmitted in unicast mode or in multicast mode;
- in each field in a series of specific signalling fields (512), information representing an association between a channel resource identifier used and a unique identifier of the concerned destination or group of concerned destinations, so that each destination (141, 142, 143) can determine each channel resource to listen to for receiving the data that are addressed thereto, whether this be in unicast mode or in multicast mode.

Fig. 1

Fig. 2

Fig. 3A

Fig. 3B

Obtention, au niveau de la couche PHY, de données à transmettre à plusieurs destinataires — 401

Obtention, au niveau de la couche PHY, de données à transmettre à un destinataire unique — 402

Vérification de capacités point-à-multipoint des destinataires et répartition des données — 403

Construction d'un entête de couche PHY selon la répartition de données — 404

Transmission de trame selon la répartition de données — 405

Fig. 4

| 501 HE-SIG-A | 502 HE-SIG-B |
|---|---|

| 511 CF | 512 UBF | 512 UBF | ... | 512 UBF |
|---|---|---|---|---|

Fig. 5

Fig. 6

Fig. 7A

Fig. 7B

```
┌─────────────────────────────────────────────┐
│                                               │  801
│         Obtention d'une image immersive       │ ~
│                                               │
└─────────────────────────────────────────────┘
                       │
                       ▼
┌─────────────────────────────────────────────┐
│         Obtention d'une région d'intérêt      │  802
│      pour chaque dispositif d'affichage       │ ~
└─────────────────────────────────────────────┘
                       │
                       ▼
┌─────────────────────────────────────────────┐
│                                               │  803
│     Détermination d'une zone de recouvrement  │ ~
│                                               │
└─────────────────────────────────────────────┘
                       │
                       ▼
┌─────────────────────────────────────────────┐
│        Calcul d'une fonction de coût F associée│  804
│            à la zone de recouvrement          │ ~
└─────────────────────────────────────────────┘
                       │
                       ▼
        non    ╱───────────────────╲   oui
       ◄───────    F < TH ?          ───────►
              ╲───────────────────╱
          805
                       │
                       ▼
┌─────────────────────────────────────────────┐
│   Identification de données à transmettre à plusieurs│  806
│  destinataires et identification desdits destinataires│ ~
└─────────────────────────────────────────────┘
                       │
                       ▼
┌─────────────────────────────────────────────┐
│                                               │  807
│   Identification de données à destinataire unique│ ~
└─────────────────────────────────────────────┘
                       │
                       ▼
┌─────────────────────────────────────────────┐
│       Communication au point d'accès AP pour  │  808
│        transmission sur le réseau WLAN        │ ~
└─────────────────────────────────────────────┘
                       ▲
                       │
┌─────────────────────────────────────────────┐
│   Identification de toutes les données comme étant│  809
│           à destinataire unique               │ ~
└─────────────────────────────────────────────┘
```

Fig. 8

Détermination de zones de recouvrement des régions d'intérêt prises deux à deux — 901

Détermination d'une liste triée en fonction de la taille des zones de recouvrement déterminées — 902

Détermination d'une zone de recouvrement commune aux régions d'intérêt de la liste — 903

Calcul d'une fonction de coût F associée à la zone de recouvrement commune — 904

oui — F < TH ? — non — 905

Point-à-multipoint pour la zone de recouvrement commune — 906

907 — Exclusion de la région d'intérêt en dernier dans la liste

non — Dernière région d'intérêt ? — oui
908

909 — Pas de point-à-multipoint

Fig. 9

**EP 3 729 792 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3229395 A